# EUROPÄISCHE PATENTANMELDUNG

(11) **EP 4 282 238 A1**
(43) Veröffentlichungstag der Anmeldung: **29.11.2023**
(21) Anmeldenummer: 23174550.6
(22) Anmeldetag: 22.05.2023
(51) Int. Cl.: A01B 39/14, A01B 39/18

(54) **BODENBEARBEITUNGSGERÄT**

(30) Priorität: 24.05.2022 DE 102022113040
(71) Anmelder: Rath jun., Engelbert, 93102 Pfatter (DE)
(72) Erfinder: Rath jun., Engelbert, 93102 Pfatter (DE)
(74) Vertreter: Glück Kritzenberger Patentanwälte PartGmbB

(57) **Zusammenfassung**

Beschrieben wird ein Bodenbearbeitungsgerät für die mechanische Unkrautbekämpfung in Reihen von Kulturpflanzen, aufweisend einen an einer Zugmaschine befestigbaren Rahmen zum Bewegen entlang einer Fahrtrichtung F und zumindest eine, an dem Rahmen befestigte Bearbeitungseinheit 2. Die Bearbeitungseinheit 2 weist ein rahmenartiges Element 4, wobei die Ausdehnung des rahmenartigen Elements 4 quer zur Fahrtrichtung F veränderbar ist, zumindest ein über ein erstes Verbindungselement 5 an dem rahmenartigen Element 4 befestigtes erstes Bodenbearbeitungswerkzeug 15.1, zumindest ein über ein zweites Verbindungselement 6 an dem rahmenartigen Element befestigtes zweites Bodenbearbeitungswerkzeug 15.2, und ein zumindest abschnittsweise im Querschnitt zylinderförmig ausgebildetes Schwenkachselement 9 auf. Das erste Bodenbearbeitungswerkzeug 15.1 und das zweite Bodenbearbeitungswerkzeug 15.2 sind quer zur Fahrtrichtung F auf verschiedenen Seiten des Schwenkachselements 9 angeordnet. Das erste Verbindungselement 5 weist einen ersten ringförmigen, das Schwenkachselement 9 hülsenartig umschließenden Abschnitt 5.M auf und das zweite Verbindungselement 6 weist einen zweiten ringförmigen, das Schwenkachselement 9 hülsenartig umschließenden Abschnitt 6.M auf. Das erste und zweite Verbindungselement 5, 6 sind derart um das Schwenkachselement 9 schwenkbar angeordnet, dass durch eine Veränderung der Ausdehnung des rahmenartigen Elements ARE quer zur Fahrtrichtung F eine Veränderung des Abstandes zwischen dem ersten Bodenbearbeitungswerkzeug und dem zweiten Bodenbearbeitungswerkzeug ATT quer zur Fahrtrichtung F bewirkbar ist.

## Beschreibung

### Technisches Gebiet

Die vorliegende Erfindung betrifft ein Bodenbearbeitungsgerät für die mechanische Unkrautbekämpfung.

### Stand der Technik

Bodenbearbeitungsgeräte für die mechanische Unkrautbekämpfung zwischen Reihen von Kulturpflanzen sind in vielfältigen Varianten bekannt. Zentraler Bestandteil solcher Bodenbearbeitungsgeräte sind Hackvorrichtungen und insbesondere Hackschare, die dazu dienen, die Wurzeln von Unkraut und ähnlichem unerwünschten Bewuchs in der Erde zu durchtrennen bzw. zu lockern. Dazu wird die Hackschar in geringer Tiefe durch den Boden gezogen, wobei üblicherweise Tiefenführungsräder vorgesehen sind, mit deren Hilfe die Hackschare den Bodenkonturen folgen können.

Dabei kann es vorkommen, dass in größeren Erdbrocken noch so viele Wurzeln eingebettet bleiben, dass das Unkraut weiterwächst, insbesondere dann, wenn bei feuchtem Wetter kein Austrocknen der Erdbrocken erfolgt. Aus diesem Grund werden Hackschare häufig mit Striegelzinken kombiniert, welche zum einen dazu dienen, die von den Hackschare abgelösten Erdschollen und -brocken zu zerkleinern, und zum anderen dazu, das Unkraut an die Erdoberfläche zu ziehen. In beiden Fällen werden die Wurzeln der Unkräuter freigelegt, trocknen aus und können nicht mehr anwachsen. Solche Bodenbearbeitungsgeräte sind beispielsweise aus der EP 0 426 960 B1, der DE 35 21 785 C2 oder der US 5,168,936 A bekannt.

Ziel jeder Unkrautbekämpfung und auch jeder mechanischen Unkrautbekämpfung ist die möglichst vollständige Entfernung des Unkrautes in den Reihen von Kulturpflanzen. Von besonderer Wichtigkeit ist dabei, auch Unkraut zu entfernen, das relativ nah an den Kulturpflanzen wächst. Dabei darf die Unkrautbekämpfung aber nicht dazu führen, dass die Kulturpflanzen in relevantem Ausmaß geschädigt werden. Dadurch ergibt sich das Problem, dass die oben beschriebenen Hackschare und Striegelzinken so geführt werden sollten, dass auch nahe an den Kulturpflanzen wachsendes Unkraut bekämpft wird, wobei aber möglichst keine Schädigung der Kulturpflanzen selbst erfolgt.

Bei Einsatz der Bodenbearbeitungsgeräte auf landwirtschaftlichen Flächen, insbesondere auf Äckern, wäre es daher bei der mechanischen Unkrautbekämpfung von Vorteil, wenn die Linie, entlang derer Hackschare und Striegelzinken geführt werden, an die realen Bedingungen des jeweiligen Anbaugebiets angepasst werden könnte.

In diesem Zusammenhang offenbart die FR 2 359 570 A1 ein Bodenbearbeitungsgerät mit einem Grundgestell und mehreren, in dem Grundgestell angeordneten und parallelogrammartig ausgebildeten Hilfsrahmen. An jedem der Hilfsrahmen sind dabei zumindest zwei Hackschare befestigt, deren Abstand zueinander quer zur Fahrtrichtung verstellbar ist, und zwar jeweils mittels eines Betätigungshebels, welcher den entsprechenden Hilfsrahmen staucht oder streckt.

Aus der DE 817 828 B ist eine Vorrichtung zur Halterung von Bodenbearbeitungsgeräten wie z.B. Gänsefüße, Grubberzinken usw. bekannt, wobei die einzelnen Werkzeughalter der Bodenbearbeitungsgeräte verstellbar gelagert sind. Weiterhin ist ein Stellmittel vorgesehen, durch dessen Betätigung die Abstände der Werkzeughalter gleichzeitig und gleichmäßig verändert werden können. Zur Veränderung des Abstandes der Werkzeughalter dient eine "Nürnberger-Schere", deren Glieder mittels einer Spindel mit Rechts- und Linksgewinde aufeinander zubewegt bzw. auseinander bewegt werden können.

Der Einsatz dieser Bodenbearbeitungsgeräte erweist sich aber als nicht praktikabel. Der wesentliche Nachteil der beschriebenen Lösungsansätze besteht darin, dass der Bodenbearbeitungsvorgang zum Verstellen des Abstandes zwischen den Hackschare unterbrochen werden muss. Es muss also bei jeder notwendigen Anpassung des Abstandes zwischen den Hackschare die Zugmaschine gestoppt und das Verstellen des Abstandes händisch vorgenommen werden. Dadurch ergibt sich ein extrem zeitraubender Aufwand, der in der Praxis nicht in ökonomisch vertretbarer Weise durchgeführt werden kann. Außerdem können die Bodenbearbeitungswerkzeuge nicht mit ausreichender Genauigkeit nahe genug an die Kulturpflanzen herangeführt werden.

Von besonderer Wichtigkeit erweist sich die Unkrautbekämpfung zu Beginn des Wachstums der Kulturpflanzen. Solange die Kulturpflanzen nur eine geringe Wachstumshöhe aufweisen, können sie durch schnell wachsendes Unkraut besonders leicht überwuchert und dadurch besonders stark geschädigt werden. Die mechanische Unkrautbekämpfung steht zu diesem Zeitpunkt vor einer ganz besonderen Herausforderung. Die jungen Kulturpflanzen sind in ihrem anfänglichen Wachstumsstadium besonders empfindlich gegen jede Art von mechanischer Einwirkung und können auch sehr leicht durch angehäufelte Erde verschüttet werden.

Insbesondere in einem frühen Wachstumsstadium der Kulturpflanzen ist es daher das Ziel einer mechanischen Unkrautbekämpfung, sämtliches nah bei den jungen Kulturpflanzen wachsendes Unkraut vollständig zu entfernen. Dabei darf die Unkrautbekämpfung aber nicht dazu führen, dass die jungen Kulturpflanzen in relevantem Ausmaß geschädigt werden.

Es besteht daher ein Bedarf an Bodenbearbeitungsgeräten für die mechanische Unkrautbekämpfung in Reihen von Kulturpflanzen, durch die eine effektive Unkrautbekämpfung auch in einer anfänglichen Wachstumsphase der Kulturpflanzen möglich wird.

### Darstellung der Erfindung

Der Erfindung, wie sie in den Ansprüchen gekennzeichnet ist, liegt die Aufgabe zu Grunde, ein Bodenbearbeitungsgerät für die mechanische Unkrautbekämpfung in Reihen von Kulturpflanzen zur Verfügung zu stellen, das eine effektive Unkrautbekämpfung auch in einer anfänglichen Wachstumsphase der Kulturpflanzen ermöglicht.

Diese Aufgabe wird erfindungsgemäß durch das Bodenbearbeitungsgerät gemäß Anspruch 1 gelöst. Weitere vorteilhafte Details, Aspekte und Ausgestaltungen der vorliegenden Erfindung ergeben sich aus den abhängigen Ansprüchen, der Beschreibung, den Beispielen und den Zeichnungen.

Die vorliegende Erfindung stellt ein Bodenbearbeitungsgerät für die mechanische Unkrautbekämpfung in Reihen von Kulturpflanzen zur Verfügung. Das Bodenbearbeitungsgerät weist einen an einer Zugmaschine befestigbaren Rahmen zum Bewegen entlang einer Fahrtrichtung und zumindest eine, an dem Rahmen befestigte Bearbeitungseinheit auf. Die Bearbeitungseinheit weist ein rahmenartiges Element auf, wobei die Ausdehnung des rahmenartigen Elements quer zur Fahrtrichtung veränderbar ist. Zudem weist die Bearbeitungseinheit zumindest ein über ein erstes Verbindungselement an dem rahmenartigen Element befestigtes erstes Bodenbearbeitungswerkzeug, zumindest ein über ein zweites Verbindungselement an dem rahmenartigen Element befestigtes zweites Bodenbearbeitungswerkzeug und ein zumindest abschnittsweise im Querschnitt zylinderförmig ausgebildetes Schwenkachselement auf. Das erste Bodenbearbeitungswerkzeug und das zweite Bodenbearbeitungswerkzeug sind quer zur Fahrtrichtung auf verschiedenen Seiten des Schwenkachselements angeordnet. Das erste Verbindungselement weist einen ersten ringförmigen, das Schwenkachselement hülsenartig umschließenden Abschnitt auf und das zweite Verbindungselement weist einen zweiten ringförmigen, das Schwenkachselement hülsenartig umschließenden Abschnitt auf. Das erste und zweite Verbindungselement sind derart um das Schwenkachselement schwenkbar angeordnet, dass durch eine Veränderung der Ausdehnung des rahmenartigen Elements quer zur Fahrtrichtung eine Veränderung des Abstandes zwischen dem ersten Bodenbearbeitungswerkzeug und dem zweiten Bodenbearbeitungswerkzeug quer zur Fahrtrichtung bewirkbar ist.

Erfindungsgemäß ist ein rahmenartiges Element vorgesehen, dessen Ausdehnung quer zur Fahrtrichtung verändert werden kann. Diese veränderliche Ausdehnung kann sowohl durch eine gelenkige Ausbildung des rahmenartigen Elements ermöglicht werden wie auch durch die elastischen Eigenschaften des Materials, aus dem das rahmenartige Element zumindest teilweise gebildet sein kann. Wie nachfolgend noch näher beschrieben, kann durch eine Bewegung von Stellmitteln eine Anpassung der Form des rahmenartigen Elements bewirkt werden, wodurch die Möglichkeit geschaffen wird, an dem rahmenartigen Element angeordnete Bearbeitungswerkzeuge, wie beispielsweise Hackschare oder Striegelzinken, im weitesten Sinne zu bewegen, insbesondere aber den Abstand zwischen mehreren solcher Bearbeitungswerkzeuge zu verändern und damit an die realen Begebenheiten eines bestimmten Ackers anzupassen. Insbesondere kann dadurch die Linie, entlang derer beispielsweise Hackschare und Striegelzinken geführt werden, in einfacher Weise ohne großen zeitlichen Aufwand verändert werden.

Der Kern der vorliegenden Erfindung liegt darin, Bodenbearbeitungswerkzeuge vorzusehen, die über Verbindungselemente an dem rahmenartigen Element befestigt sind, und zudem ein Schwenkachselement vorzusehen, das zumindest abschnittsweise im Querschnitt zylinderförmig ausgebildet ist. Die Verbindungselemente weisen jeweils einen ringförmigen Abschnitt auf, der das Schwenkachselement hülsenartig umschließt, und können daher um das Schwenkachselement verschwenkt werden. Der Abstand zwischen zwei, in einer Richtung quer zur Fahrtrichtung auf verschiedenen Seiten des Schwenkachselements angeordneten Bodenbearbeitungswerkzeugen kann auf diese Weise durch eine Veränderung der Ausdehnung des rahmenartigen Elements verändert werden.

Die Bodenbearbeitungswerkzeuge können auf zwei unterschiedliche Arten über die Verbindungselemente an dem rahmenartigen Element befestigt sein. Zum einen ist eine Befestigung über Kreuz möglich, was in einem scherenartigen Verschwenken der Bodenbearbeitungswerkzeuge um das Schwenkachselement resultiert. Bei dieser Art von Befestigung kreuzen sich das erste Verbindungselement und das zweite Verbindungselement im Bereich des Schwenkachselements. Eine Verkleinerung der Ausdehnung des rahmenartigen Elements quer zur Fahrtrichtung bewirkt in diesem Fall eine Verkleinerung des Abstandes zwischen dem ersten Bodenbearbeitungswerkzeug und dem zweiten Bodenbearbeitungswerkzeug quer zur Fahrtrichtung bzw. eine Vergrößerung der Ausdehnung des rahmenartigen Elements quer zur Fahrtrichtung eine Vergrößerung des Abstandes zwischen dem ersten Bodenbearbeitungswerkzeug und dem zweiten Bodenbearbeitungswerkzeug quer zur Fahrtrichtung.

Zum anderen ist eine Befestigung über sich nicht kreuzende Verbindungselemente möglich, was in einem Verschwenken der Bodenbearbeitungswerkzeuge in Art einer Spreizzange resultiert. In diesem Fall bewirkt eine Verkleinerung der Ausdehnung des rahmenartigen Elements quer zur Fahrtrichtung eine Vergrößerung des Abstandes zwischen dem ersten Bodenbearbeitungswerkzeug und dem zweiten Bodenbearbeitungswerkzeug quer zur Fahrtrichtung bzw. eine Vergrößerung der Ausdehnung des rahmenartigen Elements quer zur Fahrtrichtung eine Verkleinerung des Abstandes zwischen dem ersten Bodenbearbeitungswerkzeug und dem zweiten Bodenbearbeitungswerkzeug quer zur Fahrtrichtung.

Durch das Verschwenken der Verbindungselemente wird die Möglichkeit geschaffen, eine Über- oder Untersetzung vorzusehen. Die Bodenbearbeitungswerkzeuge folgen also der Veränderung des rahmenartigen Elements nicht in identischem Maße, sondern mit einer im Prinzip frei wählbaren Übersetzung. Bei einer entsprechend gewählten Untersetzung wird es somit möglich, den Abstand zwischen zwei Bodenbearbeitungswerkzeugen in sehr kleinen Schritten und extrem genau zu verändern.

Bevorzugt sind die erfindungsgemäß vorgesehenen Verbindungselemente aus drei Abschnitten aufgebaut. Neben dem ersten ringförmigen, das Schwenkachselement hülsenartig umschließenden Abschnitt weist das erste Verbindungselement einen oberen, mit dem rahmenartigen Element und mit dem ersten ringförmigen Abschnitt verbundenen Abschnitt und einen unteren, mit dem ersten ringförmigen Abschnitt und mit dem ersten Bodenbearbeitungswerkzeug verbundenen Abschnitt auf. Analog dazu weist das zweite Verbindungselement neben dem zweiten ringförmigen, das Schwenkachselement hülsenartig umschließenden Abschnitt einen oberen, mit dem rahmenartigen Element und mit dem zweiten ringförmigen Abschnitt verbundenen Abschnitt und einen unteren, mit dem zweiten ringförmigen Abschnitt und mit dem zweiten Bodenbearbeitungswerkzeug verbundenen Abschnitt auf.

Gemäß einer besonders bevorzugten Ausführungsform ist die Ausdehnung des oberen Abschnitts des ersten Verbindungselements in einer von dem rahmenartigen Element zu dem ersten ringförmigen Abschnitt weisenden Richtung größer als die Ausdehnung des unteren Abschnitts des ersten Verbindungselements in einer von dem ersten ringförmigen Abschnitt zu dem ersten Bodenbearbeitungswerkzeug weisenden Richtung. Daneben ist die Ausdehnung des oberen Abschnitts des zweiten Verbindungselements in einer von dem rahmenartigen Element zu dem zweiten ringförmigen Abschnitt weisenden Richtung größer als die Ausdehnung des unteren Abschnitts des zweiten Verbindungselements in einer von dem zweiten ringförmigen Abschnitt zu dem zweiten Bodenbearbeitungswerkzeug weisenden Richtung. Durch eine Veränderung der Ausdehnung des rahmenartigen Elements quer zur Fahrtrichtung ist damit eine im Vergleich dazu geringere Veränderung des Abstandes zwischen dem ersten Bodenbearbeitungswerkzeug und dem zweiten Bodenbearbeitungswerkzeug quer zur Fahrtrichtung bewirkbar.

Für den Fachmann ist klar, dass unter dem Ausdruck "in einer von dem rahmenartigen Element zu dem ringförmigen Abschnitt weisenden Richtung" nicht eine beliebige, von irgendeinem Punkt des rahmenartigen Elements zu einem beliebigen Punkt des ringförmigen Abschnitts weisende Richtung verstanden wird, sondern ein Vektor, der den Bereich, in dem der obere Abschnitt des Verbindungselements mit dem rahmenartigen Element verbunden ist, mit dem Bereich verbindet, in dem der obere Abschnitt des Verbindungselements mit dem ringförmigen Abschnitt verbunden ist. Analog dazu wird unter dem Ausdruck "in einer von dem ringförmigen Abschnitt zu dem ersten Bodenbearbeitungswerkzeug weisenden Richtung" nicht eine beliebige, von irgendeinem Punkt des ringförmigen Abschnitts zu einem beliebigen Punkt des ersten Bodenbearbeitungswerkzeug weisende Richtung verstanden, sondern ein Vektor, der den Bereich, in dem der untere Abschnitt des Verbindungselements mit dem ringförmigen Abschnitt verbunden ist, mit dem Bereich verbindet, in dem der untere Abschnitt des Verbindungselements mit dem Bodenbearbeitungswerkzeug verbunden ist. Unter der Ausdehnung des oberen bzw. des unteren Abschnitts wird also die Länge eines im Wesentlichen innerhalb des Verbindungselements liegenden Vektors verstanden, der sich zwischen den Endpunkten des jeweiligen Abschnitts erstreckt.

Bei der beschriebenen Ausführungsform ist also, in einfachen Worten ausgedrückt, jeweils der sich oberhalb des Schwenkachselements erstreckende Abschnitt des jeweiligen Verbindungselements länger als der sich unterhalb des Schwenkachselements erstreckende Abschnitt. Bei einer Veränderung der Ausdehnung des rahmenartigen Elements quer zur Fahrtrichtung wird diese Veränderung daher in eine vergleichsweise geringere Veränderung des Abstandes zwischen den beiden, an den unteren Abschnitten der Verbindungselemente befestigten Bodenbearbeitungswerkzeugen quer zur Fahrtrichtung übersetzt. Dies bringt bei der Unkrautbekämpfung in Reihen von Kulturpflanzen ganz erhebliche Vorteile mit sich. Es kann nämlich eine relativ grobe Veränderung der Ausdehnung des rahmenartigen Elements in eine sehr kleine, extrem genau Veränderung des Abstands zwischen den Bodenbearbeitungswerkzeugen umgesetzt werden. Dadurch können die Bodenbearbeitungswerkzeuge sehr genau bis unmittelbar an die Kulturpflanzen und insbesondere auch an junge Kulturpflanzen in einer frühen Wachstumsphase herangeführt werden. Unkraut wird mit hoher Effektivität entfernt, ohne die Pflanzen zu schädigen.

Gemäß einer alternativen Ausführungsform ist die Ausdehnung des oberen Abschnitts des ersten Verbindungselements in einer von dem rahmenartigen Element zu dem ersten ringförmigen Abschnitt weisenden Richtung geringer als die Ausdehnung des unteren Abschnitts des ersten Verbindungselements in einer von dem ersten ringförmigen Abschnitt zu dem ersten Bodenbearbeitungswerkzeug weisenden Richtung. Daneben ist die Ausdehnung des oberen Abschnitts des zweiten Verbindungselements in einer von dem rahmenartigen Element zu dem zweiten ringförmigen Abschnitt weisenden Richtung geringer als die Ausdehnung des unteren Abschnitts des zweiten Verbindungselements in einer von dem zweiten ringförmigen Abschnitt zu dem zweiten Bodenbearbeitungswerkzeug weisenden Richtung. Durch eine Veränderung der Ausdehnung des rahmenartigen Elements quer zur Fahrtrichtung ist damit eine im Vergleich dazu größere Veränderung des Abstandes zwischen dem ersten Bodenbearbeitungswerkzeug und dem zweiten Bodenbearbeitungswerkzeug quer zur Fahrtrichtung bewirkbar. Diese Ausführungsform kann von Vorteil sein, wenn das Bodenbearbeitungsgerät zwischen den Reihen von Kulturpflanzen eingesetzt wird. Der Abstand zwischen den Bodenbearbeitungswerkzeugen kann schon durch eine geringere Änderung der Ausdehnung des rahmenartigen Elements stark verändert werden. Dadurch wird eine Anpassung an unterschiedliche Gassenbreiten zwischen Reihen von Kulturpflanzen und auch eine Anpassung an Äcker mit unterschiedlichen Kulturpflanzen und damit unterschiedlicher Gassenbreite in einfacher Weise möglich.

Bevorzugt handelt es sich bei dem ersten und dem zweiten Bodenbearbeitungswerkzeug um ein erstes und ein zweites Winkelhackmesser, wobei das erste Winkelhackmesser an dem unteren Abschnitt des ersten Verbindungselements befestigt ist und das zweite Winkelhackmesser an dem unteren Abschnitt des zweiten Verbindungselements befestigt ist. Durch den Einsatz von Winkelhackmessern kann Erde mit dem darin wuchernden Unkraut besonders effektiv auf beiden Seiten von den jungen Kulturpflanzen wegbefördert werden.

Es soll an dieser Stelle explizit klar gestellt werden, dass die vorliegende Erfindung nicht auf die Verwendung von Winkelhackmessern als über Verbindungselemente mit dem rahmenartigen Element verbundene Bodenbearbeitungswerkzeuge beschränkt ist. Grundsätzlich kann jede Art von Bodenbearbeitungswerkzeugen eingesetzt werden, also beispielsweise Sechen, Hackschare oder Striegelzinken. Aufgrund des frühen Wachstumsstadiums der Kulturpflanzen und der damit verbundenen Empfindlichkeit der Pflanzen gegen mechanische Einflüsse kann es sich dabei als vorteilhaft erweisen, die Bodenbearbeitungswerkzeuge kleiner als üblich zu dimensionieren.

Gemäß einer besonders bevorzugten Ausführungsform sind an der Bearbeitungseinheit ein erstes und ein zweites Tiefenführungsrad vorgesehen, wobei das erste Tiefenführungsrad und das zweite Tiefenführungsrad quer zur Fahrtrichtung auf verschiedenen Seiten des Schwenkachselements angeordnet sind. Dabei ist das erste Tiefenführungsrad an dem unteren Abschnitt des ersten Verbindungselements befestigt und das zweite Tiefenführungsrad an dem unteren Abschnitt des zweiten Verbindungselements befestigt. Somit kann analog zu dem oben im Zusammenhang mit den über Verbindungselemente mit dem rahmenartigen Element verbundenen Bodenbearbeitungswerkzeugen beschriebenen Vorgehen durch eine Veränderung der Ausdehnung des rahmenartigen Elements quer zur Fahrtrichtung eine Veränderung des Abstandes zwischen dem ersten Tiefenführungsrad und dem zweiten Tiefenführungsrad quer zur Fahrtrichtung bewirkt werden. Der Abstand zwischen den beiden Tiefenführungsrädern kann in diesem Fall an die Größe der einzelnen Pflanzen der Reihe an Kulturpflanzen angepasst werden. Bei der Unkrautbekämpfung in einem frühen Wachstumsstadium der Pflanzen werden die Reihen so abgefahren, dass sich die einzelnen Pflanzen zwischen den beiden Tiefenführungsrädern befinden. Dabei muss darauf geachtet werden, dass die Pflanzen durch die Räder nicht geschädigt werden. Dies wird durch den veränderlichen Abstand der Räder in einfacher Weise möglich gemacht.

Durch die Anpassung des Abstands zwischen den beiden Tiefenführungsrädern wird es daneben möglich, die Tiefenführungsräder relativ nahe an die Kulturpflanzen heranzuführen. Der geringe Abstand zwischen Tiefenführungsrädern und Pflanzenreihe ist mit dem Vorteil einer hochgradig exakten Tiefenführung verbunden. Je näher die Räder an den Pflanzen laufen, umso größer ist die Wahrscheinlichkeit, dass die Räder über das gleiche oder über ein dem Höhenniveau der Pflanzen sehr ähnliches Höhenniveau laufen. Die Bodenbearbeitungswerkzeuge, und insbesondere die über die Verbindungselemente an dem rahmenartigen Element angeordneten Bodenbearbeitungswerkzeuge, können dadurch mit der exakt gewünschten Eindringtiefe durch den Boden geführt werden.

Da die beiden Tiefenführungsräder an dem unteren Abschnitt des jeweiligen Verbindungselements befestigt sind und diese Verbindungselemente in einer allgemeinen Ausführungsform starr ausgebildet sind, verändert sich bei einem Verschwenken der Verbindungselemente der Sturz der Tiefenführungsräder. Ausgehend von einer Grundeinstellung ohne Sturz führt im Falle sich kreuzender Verbindungselemente, also im Falle eines scherenartigen Verschwenkens, eine Vergrößerung der Ausdehnung des rahmenartigen Elements quer zur Fahrtrichtung zu einer Vergrößerung des Abstandes zwischen den Tiefenführungsrädern und zu einem positiven Sturz der Räder. Umgekehrt führt eine Verkleinerung der Ausdehnung des rahmenartigen Elements quer zur Fahrtrichtung zu einer Verkleinerung des Abstandes zwischen den Tiefenführungsrädern und zu einem negativen Sturz der Räder.

Für den Fall sich nicht kreuzender Verbindungselemente, also im Fall eines Verschwenkens in Art einer Spreizzange, führt, ausgehend von einer Grundeinstellung ohne Sturz, eine Vergrößerung der Ausdehnung des rahmenartigen Elements quer zur Fahrtrichtung zu einer Verkleinerung des Abstandes zwischen den Tiefenführungsrädern und zu einem negativen Sturz der Räder. Umgekehrt führt eine Verkleinerung der Ausdehnung des rahmenartigen Elements quer zur Fahrtrichtung zu einer Vergrößerung des Abstandes zwischen den Tiefenführungsrädern und zu einem positiven Sturz der Räder.

Der unterschiedliche Sturz der Tiefenführungsräder eröffnet eine weiter Option für eine gezielte Bodenbearbeitung. Weisen die Räder nämlich einen positiven Sturz auf, so wird durch die Lauffläche der Räder in einem gewissen Ausmaß lockeres Erdreich zu der Pflanzenreihe hinbewegt. Umgekehrt wird in dem Fall, dass die Tiefenführungsräder einen negativen Sturz aufweisen, Erde von der Pflanzenreihe weg nach außen bewegt.

Die Verbindungselemente können auch mit einem Gelenk ausgestattet sein, wodurch die Veränderung des Sturzes der Räder bei einer Änderung des Abstandes zwischen den Rädern verhindert werden kann.

Bevorzugt ist die Bearbeitungseinheit mit einem Stützelement ausgestattet. Dieses Stützelement ist an dem Schwenkachselement befestigt. Besonders bevorzugt handelt es sich bei dem Stützelement um ein längenvariables Stützelement. Durch ein längenvariables Stützelement kann eine Höhenverstellung der Tiefenführungsräder relativ zu dem rahmenartigen Element bewirkt werden. Bei einer Vergrößerung der Länge des Stützelements erhöht sich der Abstand der Tiefenführungsräder von dem rahmenartigen Element. Umgekehrt bewirkt eine Verkleinerung der Länge des Stützelements eine Verringerung des Abstands der Tiefenführungsräder von dem rahmenartigen Element. Das Stützelement kann auch beweglich an dem Schwenkachselement befestigt sein, insbesondere kann das Stützelement mit seinem Endabschnitt das Schwenkachselement umgreifen. Der Endabschnitt des Stützelements ist in diesem Fall entlang des Schwenkachselements in dessen Achsrichtung beweglich ausgebildet.

Gemäß einer besonders bevorzugten Ausführungsform weist die Bearbeitungseinheit zumindest einen ersten und einen zweiten Striegelzinken auf, wobei der erste und der zweite Striegelzinken an dem Schwenkachselement befestigt sind, wobei der erste und der zweite Striegelzinken bevorzugt zwischen einer Parkposition und einer Nutzposition klappbar ausgebildet sind. Durch die Befestigung der Striegelzinken an dem Schwenkachselement wird erreicht, dass sich der Abstand zwischen den beiden Striegelzinken bei einer Änderung der Ausdehnung des rahmenartigen Elements quer zur Fahrtrichtung nicht verändert. Die beiden Striegelzinken werden vielmehr mit einem vorbestimmten Abstand zueinander an dem Schwenkachselement befestigt. Der Abstand zwischen den beiden Striegelzinken wird dabei entsprechend der Größe der Kulturpflanzen in einer anfänglichen Wachstumsphase gewählt. Bei der Bodenbearbeitung in einer Pflanzenreihe, also bei einer Bodenbearbeitung, bei der die beiden Tiefenführungsräder so geführt werden, dass sich die Pflanzenreihe immer zwischen den beiden Rädern befindet, laufen die beiden Striegelzinken die Pflanzenreihe immer an beiden Seiten der einzelnen Pflanzen ab. Der Boden wird also auf beiden Seiten jeder Kulturpflanze aufgelockert und dort wachsendes Unkraut abgetötet. Da diese Art der Bearbeitung mit ganz besonderer Vorsicht durchgeführt werden muss, um die jungen Kulturpflanzen nicht zu schädigen, werden bevorzugt Striegelzinken eingesetzt, die eine im Vergleich zu üblichen Striegelzinken verkleinerte Dimensionierung aufweisen. Selbstverständlich dürfen die Striegelzinken nicht zu filigran ausgebildet werden, um eine häufige Beschädigung bzw. Zerstörung der Zinken zu vermeiden, der Durchmesser und die elastische Biegbarkeit der Zinken kann aber angepasst an die geringe Wuchshöhe der Pflanzen gewählt werden.

Die Striegelzinken können in an sich bekannter Weise verschwenkbar ausgebildet sein. In diesem Fall ist eine den Striegelzinken zugeordnete Verstelleinrichtung vorgesehen, durch die die Vorspannung der Striegelzinken verstellbar ist. Vorteilhafterweise besteht diese Verstelleinrichtung aus einem Draht oder einer Schnur, welcher am Striegelzinken befestigt ist, über ein Rahmenrohr umgelenkt wird und an einem weiteren Rahmenrohr befestigt ist. Durch Drehung des Rahmenrohres wird der Draht bzw. die Schnur um das Rahmenrohr aufgewickelt und übt dadurch eine entsprechende Zugkraft auf den Striegelzinken aus. Ist einer solchen Verstelleinrichtung eine Antriebseinheit zugeordnet, wobei es sich bei der Antriebseinheit besonders bevorzugt um einen mittels eines Steuergeräts ansteuerbaren elektrischen oder hydraulischen Stellantrieb handelt, dann kann die Vorspannung der Striegelzinken und damit die Einstellung des Zinkendruckes von der Zugmaschine aus auch während der Bodenbearbeitung erfolgen. Der Zinkendruck kann bei Bedarf einfach und schnell an die jeweiligen Verhältnisse auf dem Acker angepasst werden, wobei der Bodenbearbeitungsvorgang nicht zu unterbrochen werden braucht. Es ist aber auch ein händisches Verstellen der Striegelzinken möglich und wird in der Praxis angewandt.

Wie bereits erwähnt kann die veränderliche Ausdehnung des rahmenartigen Elements sowohl durch eine gelenkige Ausbildung des rahmenartigen Elements ermöglicht werden wie auch durch die elastischen Eigenschaften eines Materials, aus dem das rahmenartige Element in diesem Fall zumindest teilweise gebildet ist. Gemäß einer bevorzugten Ausführungsform besteht das rahmenartige Element zumindest abschnittsweise aus einem elastischen Material. Entscheidend für die Funktionsfähigkeit eines solchen rahmenartigen Elements sind die elastischen Eigenschaften des Materials, aus dem das rahmenartige Element besteht bzw. zum überwiegenden Teil besteht. Unter Elastizität wird allgemein und auch im Rahmen des vorliegenden Textes die Eigenschaft eines Körpers oder Werkstoffes verstanden, unter Krafteinwirkung seine Form zu verändern und bei Wegfall der einwirkenden Kraft in die Ursprungsform zurückzukehren.

Grundsätzlich kann jede Art von Material mit elastischen Eigenschaften eingesetzt werden. Bekanntermaßen weist zwar jedes Material in einem gewissen Umfang elastische Eigenschaften auf, allerdings wird im Rahmen des vorliegenden Textes auf Materialien Bezug genommen, deren elastische Eigenschaften mit einem in der Praxis vertretbaren Aufwand eingesetzt werden können. Dem Fachmann ist selbstverständlich klar und bewusst, dass die elastischen Eigenschaften eines makroskopischen Körpers nicht ausschließlich von den elastischen Eigenschaften des Materials abhängen, aus dem dieser Körper besteht, sondern auch von der Dimensionierung des Körpers. Ist also im Rahmen des vorliegenden Textes von einem z.B. aus Federstahl bestehenden rahmenartigen Element die Rede, so ist dem Fachmann klar, dass dieses rahmenartige Element bei der Bodenbearbeitung im landwirtschaftlichen Bereich eingesetzt wird. Der Fachmann wird folgern, dass es sich bei dem rahmenartigen Element weder um meterdicke Stahlblöcke handelt, noch um Metallfolien mit einer Dicke im Mikrometerbereich. Der Fachmann wird vielmehr zwanglos die Dimensionierung des rahmenartigen Elements so wählen, dass das Element einerseits die gewünschten elastischen Eigenschaften aufweist, andererseits aber stabil genug ausgebildet ist, um den Beanspruchungen bei der Bearbeitung landwirtschaftlicher Flächen Stand zu halten.

Bevorzugt handelt es sich bei dem elastischen Material um ein Elastomer, einen Thermoplast, einen Gummi, insbesondere Hartgummi, oder um Stahl, insbesondere Federstahl. Bevorzugt handelt es sich bei dem Stahl um einen Edelstahl, insbesondere bevorzugt um einen Chrom-Nickel-Edelstahl. Besonders bevorzugt handelt es sich um Edelstahl 1.4310. Besonders gute Eigenschaften weist auch Hardox^{®}-Stahl auf.

Ein nicht-gelenkig ausgebildetes rahmenartiges Element ist bevorzugt einstückig oder aus mehreren, relativ zueinander unbeweglich und fest miteinander verbundenen Teilelementen aufgebaut. Eine einstückige Ausführung eines solchen rahmenartigen Elements bedeutet, dass das gesamte Element aus dem elastischen Material besteht. Ist das rahmenartige Element aus mehreren Teilelementen aufgebaut, so bestehen zumindest einzelne Teilelemente aus dem elastischen Material. Die einzelnen elastischen Teilelemente sind relativ zueinander unbeweglich und fest miteinander verbunden. Zur Verbindung der einzelnen Teilelemente kann jede Art von Fixierelement, also Klammern, Schrauben, Nieten, usw., eingesetzt werden. Diese Fixierelemente sind in der Regel nicht aus einem elastischen Material gebildet, sondern aus den für die jeweilige Art von Fixierelement üblichen metallischen Materialien. Dem Fachmann ist aber klar, dass die gewünschten und erforderlichen elastischen Eigenschaften des rahmenartigen Elements durch die aus nicht-elastischem Material bestehenden Teilabschnitte bzw. Fixierelemente nicht beeinflusst werden.

Das rahmenartige Element kann unterschiedlichste Formen aufweisen. Grundsätzlich möglich sind eine offene und eine geschlossene Form des rahmenartigen Elements. Im Falle einer offenen Form weist das rahmenartige Element eine C-artige oder U-artige oder irgendwie anders ausgeprägte offene Form mit zwei Enden auf. Im Falle einer geschlossenen Form ist das rahmenartige Element durchgängig ausgebildet. Es weist also eine in sich geschlossene Form, beispielsweise ein Oval, einen Kreis, ein Rechteck, eine Raute oder irgendeine anders ausgeprägte geschlossene Form ohne Ende auf. Eine rechteckige Form oder eine rautenförmige Ausbildung bietet sich vor allem bei einem gelenkigen rahmenartigen Element an. Die gelenkigen Verbindungsstellen der einzelnen Teilelemente des rahmenartigen Elements bilden in diesem Fall die Ecken des Rechtecks bzw. der Raute.

Gemäß einer besonders bevorzugten Ausführungsform ist an der Bearbeitungseinheit eine Mehrzahl weiterer Bearbeitungswerkzeuge vorgesehen, wobei die Bearbeitungswerkzeuge durch ein oder mehrere Verbindungsmittel mit dem rahmenartigen Element der Bearbeitungseinheit verbunden sind, wobei es sich bei den Bearbeitungswerkzeugen bevorzugt um Hackschare, Sechen und Striegelzinken handelt. Durch diese Ausführungsform wird sichergestellt, dass das Bodenbearbeitungsgerät nicht nur zur Bodenbearbeitung in einer Reihe von Kulturpflanzen eingesetzt werden kann, sondern auch zur Bodenbearbeitung zwischen Reihen von Kulturpflanzen. In diesem Fall werden die an dem scherenartig verschwenkbaren Verbindungselementen angeordneten Bearbeitungswerkzeuge entweder ganz entfernt oder in eine Parkposition verschwenkt. Gleiches gilt für die an dem Schwenkachselement angebrachten Striegelzinken.

Die vorliegenden Erfindung umfasst zwei verschiedene Gruppen von Bodenbearbeitungswerkzeugen. Zum einen sind erfindungsgemäß ein erstes und ein zweites Bodenbearbeitungswerkzeug vorgesehen, die über Verbindungselemente an dem rahmenartigen Element befestigt sind und deren Abstand voneinander durch eine Veränderung der Ausdehnung des rahmenartigen Elements quer zur Fahrtrichtung und einem Verschwenken der Verbindungselemente verändert werden kann. Diese verschwenkbar befestigten Bodenbearbeitungswerkzeuge - und auch die an dem Schwenkachselement angeordneten Striegelzinken - sind zur Bodenbearbeitung über der Pflanzenreihe, also in einem frühen Wachstumsstadium der Pflanzen, vorgesehen. Bei der zweiten Gruppe von Bodenbearbeitungswerkzeugen handelt es sich um Werkzeuge, die direkt über Verbindungsmittel mit dem rahmenartigen Element verbunden sind und zur Bodenbearbeitung zwischen den Pflanzenreihen vorgesehen sind. Auch bei diesen Werkzeugen kann der Abstand zwischen den Werkzeugen variiert werden, diese Veränderung entspricht aber immer der Veränderung der Ausdehnung des rahmenartigen Elements. Bei Einsatz der Bearbeitungseinheit zwischen den Pflanzenreihen sind die verschwenkbaren Bearbeitungswerkzeuge und die die an dem Schwenkachselement angeordneten Striegelzinken in eine Parkposition geklappt oder komplett entfernt.

Gemäß einer besonders bevorzugten Ausführungsform verläuft das rahmenartige Element in einer Ebene. Das rahmenartige Element wird durch die Bewegung eines ersten und eines zweiten Stellmittels derart elastisch deformiert, dass sich die Ausdehnung des rahmenartigen Elements quer zur Fahrtrichtung verändert. Auf diese Weise kann eine Veränderung des Abstandes zwischen an dem rahmenartigen Element optional angeordneten Bearbeitungswerkzeugen bewirkt werden. Für den Fachmann ist es selbstverständlich, dass diese Veränderung des Abstandes zwischen den Bearbeitungswerkzeugen in einer horizontalen Richtung erfolgen soll. Die Unkrautbekämpfung zwischen Reihen von Kulturpflanzen in einer späteren Wachstumsphase soll ja auch nahe neben den Kulturpflanzen wachsendes Unkraut bekämpfen. Um dies zu erreichen, müssen die Bearbeitungswerkzeuge möglichst nahe an die Kulturpflanzen herangeführt werden, ohne diese zu schädigen. Dieses Ziel kann durch eine Veränderung des Abstandes zwischen den Bearbeitungswerkzeugen in einer horizontalen Richtung erfolgen.

Eine Änderung des Abstandes zwischen den über Verbindungsmittel direkt an dem rahmenartigen Element befestigten Bearbeitungswerkzeugen durch eine elastische Deformation des rahmenartigen Elements kann aber am effektivsten dadurch erfolgen, dass das rahmenartige Element im Wesentlichen in einer Ebene ausbildet ist. Besonders bevorzugt ist das rahmenartige Element so an der Bearbeitungseinheit angeordnet, dass die Ebene des rahmenartige Elementes in horizontaler Richtung ausgebildet ist. In diesem Fall kann jede Bewegung der Stellmittel direkt proportional in eine Veränderung des Abstandes zwischen den direkt über Verbindungsmittel an dem rahmenartigen Element befestigten Bearbeitungswerkzeugen umgesetzt werden.

Das rahmenartige Element kann auch zumindest eine Schlaufe aufweisen, wobei die Schlaufe in der Ebene des rahmenartigen Elements oder senkrecht zur Ebene des rahmenartigen Elements verläuft. Bei einer in der Ebene des rahmenartigen Elements angeordneten Schlaufe wird die elastische Deformierbarkeit des rahmenartigen Elements verbessert. Im Bereich einer senkrecht zur Ebene des rahmenartigen Elements angeordneten Schlaufe kann vorteilhafterweise ein Bearbeitungswerkzeug angebracht werden, insbesondere eine Hackschar, welches dann federnd eventuellen Bodenunebenheiten folgen kann.

Gemäß einer weiteren, besonders bevorzugten Ausführungsform weist die Bearbeitungseinheit zusätzlich auf:
- ein erstes, beweglich ausgebildetes Stellmittel, wobei das erste Stellmittel über zumindest ein erstes Verbindungsteil mit dem rahmenartigen Element verbunden ist, und ein zweites, beweglich ausgebildetes Stellmittel, wobei das zweite Stellmittel über zumindest ein zweites Verbindungsteil mit dem rahmenartigen Element verbunden ist, und
- zumindest eine Verstelleinheit zum Ausführen einer Bewegung des ersten und des zweiten Stellmittels, wobei durch die Bewegung des ersten und des zweiten Stellmittels die Ausdehnung des rahmenartigen Elements quer zur Fahrtrichtung veränderbar ist.

Gemäß einer besonders bevorzugten Ausführungsform ist durch die Verstelleinheit eine lineare, quer zur Fahrtrichtung orientierte Bewegung des ersten und des zweiten Stellmittels bewirkbar, wobei die Bewegung des ersten Stellmittels antiparallel zur Bewegung des zweiten Stellmittels orientiert bewirkbar ist. Um die erfindungsgemäß vorgesehene Änderung der Ausdehnung des rahmenartigen Elements quer zur Fahrtrichtung besonders einfach zu bewirken, ist eine Bewegung des ersten Stellmittels und des zweiten Stellmittels in entgegengesetzter Richtung besonders bevorzugt. Grundsätzlich kann auch eine unterschiedlich starke Bewegung der beiden Stellmittel in dieselbe Richtung oder sogar eine Bewegung der Stellmittel in eine beliebige Richtung, die lediglich eine Komponente in der Ebene des rahmenartigen Elements aufweisen muss, in eine Änderung der Ausdehnung des rahmenartigen Elements quer zur Fahrtrichtung umgesetzt werden. Konstruktiv am wenigsten aufwändig ist aber die Übertragung einer in entgegengesetzter Richtung orientierten Bewegung des ersten und des zweiten Stellmittels auf das rahmenartige Element. Besonders bevorzugt ist durch die Verstelleinheit eine lineare, quer zur Fahrtrichtung orientierte Bewegung des ersten und des zweiten Stellmittels bewirkbar. Ganz besonders bevorzugt ist die Bewegung des ersten Stellmittels antiparallel zur Bewegung des zweiten Stellmittels bewirkbar. Durch diese Ausführungsform kann durch ein bestimmtes Ausmaß an Bewegung der Stellmittel eine besonders starke Deformation des rahmenartigen Elements quer zur Fahrtrichtung bewirkt werden.

Bei einer Bewegung der mit dem rahmenartigen Element verbundenen Stellmittel wird diese Bewegung in eine Veränderung der Form des rahmenartigen Elements umgesetzt. Werden die Stellmittel nachfolgend in ihre ursprüngliche Position zurückbewegt, so nimmt auch das rahmenartige Element aufgrund seiner elastischen Eigenschaften oder seiner Gelenke wieder seine ursprüngliche Form und Position ein. Da die Ausdehnung des rahmenartigen Elements durch die Bewegung des ersten und des zweiten Stellmittels quer zur Fahrtrichtung verändert wird, kann auf diese Weise sowohl ein Verschwenken der Verbindungselemente um die Schwenkachse und damit die erfindungsgemäße Veränderung des Abstandes zwischen dem ersten Bodenbearbeitungswerkzeug und dem zweiten Bodenbearbeitungswerkzeug quer zur Fahrtrichtung bewirkt werden, als auch eine Veränderung des Abstandes zwischen an dem rahmenartigen Element angeordneten Bearbeitungswerkzeugen bewirkt werden. Aufgrund der elastischen Eigenschaften des rahmenartigen Elements oder aufgrund der Gelenke des rahmenartigen Elements sind diese Abstandsveränderungen reversibel ausgebildet.

Durch die über jeweils zumindest ein Verbindungsteil mit dem rahmenartigen Element verbundenen Stellmittel wird also erreicht, dass eine Bewegung der Stellmittel in eine Bewegung des rahmenartigen Elements umgesetzt wird. Dabei wird die Bewegung der Stellmittel über die Verbindungsteile auf das rahmenartige Element übertragen, dessen elastische Eigenschaften oder dessen Gelenke eine Anpassung der Breite des rahmenartigen Elements quer zur Fahrtrichtung ermöglichen.

Die Bewegung der Stellmittel kann im allgemeinsten Fall durch eine den Stellmitteln zugeordnete Verstelleinheit mit Antriebsmittel bewirkt werden. Bei dem Antriebsmittel kann es sich beispielsweise um einen Hydraulikzylinder handeln, welcher bevorzugt mit einem Wegmesssystem ausgestattet ist. Es kann aber auch jedem Stellmittel eine separate Verstelleinheit zugeordnet sein.

Gemäß einer bevorzugten Ausführungsform ist ein quer zur Fahrtrichtung angeordnetes Rohr vorgesehen, wobei das Rohr zumindest eine erste Führungshülse und eine zweite Führungshülse aufweist. Die erste Führungshülse ist an ihrer Außenseite mit einem ersten Kraftübertragungsmittel und die zweite Führungshülse ist an ihrer Außenseite mit einem zweiten Kraftübertragungsmittel ausgestattet. Die Verbindung des ersten, beweglich ausgebildeten Stellmittels mit dem rahmenartigen Element ist in diesem Fall dadurch realisiert, dass das erste, beweglich ausgebildete Stellmittel über das erste Kraftübertragungsmittel mit der ersten Führungshülse verbunden ist und die erste Führungshülse über das erste Verbindungsteil mit dem rahmenartigen Element verbunden ist. Die Verbindung des zweiten, beweglich ausgebildeten Stellmittels mit dem rahmenartigen Element ist dadurch ausgebildet, dass das zweite, beweglich ausgebildete Stellmittel über das zweite Kraftübertragungsmittel mit der zweiten Führungshülse verbunden ist und die zweite Führungshülse über das zweite Verbindungsteil mit dem rahmenartigen Element verbunden ist.

Gemäß dieser Ausführungsform wird das aufgrund seiner elastischen Eigenschaften in seiner Form veränderliche rahmenartige Element mit einer Vorrichtung kombiniert, die durch eine lineare Bewegung von Hülsen entlang eines Rohres eine Anpassung der Form des rahmenartigen Elements bewirkt.

Durch die an dem Rohr vorgesehenen Führungshülsen und deren Verbindung mit dem rahmenartigen Element wird erreicht, dass eine Bewegung der Führungshülsen in eine Deformation des rahmenartigen Elements umgesetzt wird. Dabei wird die Bewegung der Führungshülsen über Verbindungsteile auf das rahmenartige Element übertragen, dessen elastische Eigenschaften eine Anpassung der Breite des rahmenartigen Elements quer zur Fahrtrichtung ermöglichen. Die Bewegung der Führungshülsen wird durch zwei Stellmittel verursacht, von denen jeweils eines mit jeweils einer Führungshülse verbunden ist. Dabei wird die Bewegung der Stellmittel über jeweils ein Kraftübertragungsmittel auf die Führungshülsen übertragen.

Die konstruktive Verwirklichung des Bodenbearbeitungsgerätes gestaltet sich in dem Fall, dass die Führungshülsen an einem quer zur Fahrtrichtung angeordneten Rohr angebracht sind, besonders einfach. Ähnliches gilt für die Übertragung der Bewegung der Stellmittel über jeweils ein Kraftübertragungsmittel auf die Führungshülsen. Diese Übertragung ist besonders einfach dadurch zu verwirklichen, dass es sich bei dem ersten Stellmittel um ein erstes, quer zur Fahrtrichtung beweglich ausgebildetes Stellmittel und bei dem zweiten Stellmittel um ein zweites, quer zur Fahrtrichtung beweglich ausgebildetes Stellmittel handelt. In diesem Fall kann die Bewegung der Stellmittel über die Kraftübertragungsmittel direkt in eine quer zur Fahrtrichtung orientierte Bewegung der ersten Führungshülse und der zweiten Führungshülse umgesetzt werden. Bewegen sich die beiden Führungshülsen aufeinander zu, so wird die Ausdehnung des rahmenartigen Elements quer zur Fahrtrichtung verringert. Bewegen sich die beiden Führungshülsen voneinander weg, so wird die Ausdehnung des rahmenartigen Elements quer zur Fahrtrichtung vergrößert.

Besonders bevorzugt sind also Ausführungsformen mit einem ersten, quer zur Fahrtrichtung beweglich ausgebildeten Stellmittel und einem zweiten, quer zur Fahrtrichtung beweglich ausgebildeten Stellmittel. Bei den Stellmitteln handelt es sich bevorzugt um quer zur Fahrtrichtung angeordnete Rohre.

Die beweglich ausgebildeten Stellmittel können auch durch eine erste und eine zweite Gewindehülse verwirklicht werden, die mit einem ersten und einem zweiten Eingriffsmittel zusammenwirken. Das erste und das zweite Eingriffsmittel sind an einem quer zur Fahrtrichtung angeordneten Rohr angebracht. Das erste Eingriffsmittel steht dabei in Eingriff mit der ein linksdrehendes Innengewinde aufweisenden ersten Gewindehülse, und das zweite Eingriffsmittel in Eingriff mit der ein rechtsdrehendes Innengewinde aufweisenden zweiten Gewindehülse, wobei die erste Gewindehülse und die zweite Gewindehülse jeweils über zumindest ein Verbindungsteil mit dem rahmenartigen Element verbundenen sind. Durch eine Drehung des Rohres um dessen Längsachse werden die Gewindehülsen relativ zueinander derart bewegt, dass sich aufgrund der Übertragung der Bewegung über die Verbindungsteile auf das rahmenartige Element die Ausdehnung des rahmenartigen Elements quer zur Fahrtrichtung verändert.

Besonders bevorzugt sind Ausführungsformen, bei denen die erste Führungshülse und die zweite Führungshülse in entgegengesetzter Richtung bewegbar ausgebildet sind.

Unter einem "Rohr" wird im Rahmen der vorliegenden Erfindung ein langgestrecktes, Element verstanden, das sowohl hohl wie auch als massiver Vollkörper ausgebildet sein kann. Dabei kann es sich um ein im Querschnitt kreisförmiges, ovales oder auch eckiges Element handeln. Ein zylindrischer Körper kann also ebenso verwendet werden wie ein Vierkantrohr.

Die an dem Rohr angeordneten Führungshülsen umgreifen das Rohr im Wesentlichen passgenau. Je nach Ausbildung des Rohres weisen die Führungshülsen einen unterschiedlichen Querschnitt auf. Handelt es sich bei dem Rohr beispielsweise um einen Zylinder, so sind die Führungshülsen als Hohlzylinder ausgebildet. Ist das Rohr ein Profilrohr mit einer grundsätzlich beliebigen Zahl von Kanten, so weisen die Führungshülsen eine entsprechende Zahl von Kanten auf.

Die an dem Rohr angeordneten Führungshülsen müssen das Rohr nicht vollständig umgreifen, sondern können auch in einer nicht-geschlossenen Form ausgebildet sein. Im Falle eines zylindrischen Rohres oder eines Rohres mit ovalem Querschnitt können die Führungshülsen also beispielsweise C-förmig ausgebildet sein. Im Falle eines Vierkantrohres können die Führungshülsen im wesentlichen U-förmig ausgebildet sein, wobei die Winkel zwischen Steg und Schenkel des "U" 90° betragen, der Übergang also eckig ausgebildet ist. Außerdem müssen an den Enden der Schenkel kurze, das Rohr übergreifende Überstände vorgesehen sein, um einen sicheren Sitz der Führungshülse am Rohr zu gewährleisten.

Der Rahmen des Bodenbearbeitungsgeräts weist bevorzugt einen an sich bekannten Dreipunktturm auf, mit dessen Hilfe die Verbindung des Bodenbearbeitungsgeräts mit einem Dreipunktgestänge der Zugmaschine vorgenommen werden kann.

Besonders bevorzugt handelt es sich bei dem ersten und bei dem zweiten Kraftübertragungsmittel um ein erstes und ein zweites Gestängeteil, wobei erstes und zweites Gestängeteil unterschiedliche Längen aufweisen. Auf diese Weise ist in konstruktiv besonders einfacher Weise eine feste Verbindung zwischen Führungshülsen und Stellmitteln möglich. Aufgrund der unterschiedlichen Länge des ersten und zweiten Gestängeteils können die Stellmittel in Fahrtrichtung versetzt zueinander angeordnet werden. Für den Fachmann ist klar, dass das erste und das zweite Kraftübertragungsmittel in vertikaler Richtung eine gewisse Flexibilität aufweisen können und lediglich in horizontaler Richtung nicht deformierbar ausgebildet sein dürfen. Die Verbindung zwischen Führungshülsen und Stellmitteln muss nämlich zur Kraftübertragung lediglich in horizontaler Richtung fest ausgebildet sein. Aufgrund der an dem Rahmen in vertikaler Richtung üblicherweise beweglich angeordneten Bearbeitungseinheit kann es zu einer vertikalen Bewegung des Rohres relativ zu den Stellmitteln kommen. Diese vertikale Bewegung kann auf verschiedene Arten ermöglicht werden. Die Kraftübertragungsmittel können beispielsweise mit einem Gelenk ausgestattet sein oder als teleskopierbare Stange ausgebildet sein. Es können aber auch die Verbindungsteile, welche die Führungshülsen mit dem rahmenartigen Element verbinden, in vertikaler Richtung flexibel ausgebildet sein. Auch in diesem Fall können Gelenke oder teleskopierbare Stangen zum Einsatz kommen.

Beim Einsatz des erfindungsgemäßen Bodenbearbeitungsgerätes auf dem Acker kommt es zu einer hohen Materialbeanspruchung. Insbesondere die Auf- und Abbewegungen der Bearbeitungseinheit können zu einem vorzeitigen Verschleiß der an der Bearbeitungseinheit angebrachten Mittel führen. Der Einsatz von Führungshülsen, die an einem Rohr angeordnet sind, eröffnet die Möglichkeit, dieses Rohr in hartverchromter Form auszuführen. Ein Verschleiß der Führungshülsen ist daher nicht zu erwarten. Zudem wird die Möglichkeit geschaffen, das Rohr als Rahmenrohr auszuführen oder fest mit einem Rahmenrohr zu verbinden.

Das rahmenartige Element kann in Draufsicht eine parallelogrammartige Form aufweisen. Der besondere Vorteil eines rahmenartigen Elements in parallelogrammartiger Form liegt darin, dass die elastischen Eigenschaften bzw. die Gelenke des rahmenartigen Elements möglichst effektiv zu einer Änderung der Ausdehnung des rahmenartigen Elements quer zur Fahrtrichtung genutzt werden können.

In weiteren Ausführungsformen ist das rahmenartige Element in Form eines Rhombus ausgebildet. Bei einem Rhombus handelt es sich bekanntermaßen um ein konvexes Viereck, dessen vier Seiten gleich lang sind. Rhomben sind spezielle Formen von Parallelogrammen. Ein rahmenartiges Element in Form eines Rhombus weist die im Zusammenhang mit einer parallelogrammartigen Form genannten Vorteile auf. Zudem besitzt der Rhombus einen hohen Grad an Symmetrie, wodurch eine identische Veränderung der Form des rahmenartigen Elements auf beiden Seiten des Schwenkachselements ermöglicht wird.

Im Allgemeinen sind Ausführungsformen besonders bevorzugt, bei denen das rahmenartige Element eine Symmetrieachse in Fahrtrichtung aufweist. Das rahmenartige Element ist in diesem Fall symmetrisch zum Schwenkachselement aufgebaut. Da das erste Stellmittel über das erste Verbindungsteil besonders bevorzugt mit einem, auf einer Seite der Symmetrieachse angeordneten Teil des rahmenartigen Elements verbunden ist, und da das zweite Stellmittel über das zweite Verbindungsteil besonders bevorzugt mit dem auf der anderen Seite der Symmetrieachse angeordneten Teil des rahmenartigen Elements verbunden ist, bewirkt eine symmetrische Bewegung der beiden Stellmittel auch eine symmetrische Deformation des rahmenartigen Elements.

Besonders bevorzugt handelt es sich bei der Verstelleinheit um einen mittels eines Steuergeräts ansteuerbaren elektrischen oder hydraulischen Stellantrieb. Dadurch kann die Bewegung der Stellmittel von der Zugmaschine aus auch während der Bodenbearbeitung erfolgen. Die Breite des rahmenartigen Elements kann damit bei Bedarf einfach und schnell an die jeweiligen Verhältnisse auf dem Acker angepasst werden, wobei der Bodenbearbeitungsvorgang nicht unterbrochen zu werden braucht. Die Verstelleinheit kann zudem mit einem aus dem Stand der Technik bekannten Wegmesssystem ausgestattet sein.

Ein elektrischer Stellantrieb kann zweckmäßigerweise einen an dem Rahmen angeordneten Getriebemotor umfassen, der z.B. über einen Riemen- oder Kettenantrieb mit mindestens einem Stellrad zur Drehung mindestens einer mit einem Stellmittel verbundenen Antriebswelle gekoppelt ist. Ein bezüglich der Energieversorgung besonders vorteilhafter und daher für den Antrieb auch großer Bodenbearbeitungsgeräte mit einer Vielzahl an Bearbeitungseinheiten bestens geeigneter hydraulischer Antrieb kann einen am Rahmen angeordneten Hydraulikzylinder umfassen, der über eine Zugmittelanordnung mit mindestens einem Stellrad zur Drehung mindestens einer mit einem Stellmittel verbundenen Antriebswelle gekoppelt ist.

Bei der Verstelleinheit kann es sich aber auch um ein händisch bedienbares Element handeln. In diesem Fall kann die Bewegung der Stellmittel nicht von der Zugmaschine aus während der Bodenbearbeitung erfolgen. Vielmehr muss zur Anpassung der Breite der rahmenartigen Elemente an die jeweiligen Verhältnisse auf dem Acker der Bodenbearbeitungsvorgang unterbrochen werden, um die Verstelleinheit händisch zu bewegen. Dem Nachteil der Unterbrechung der Bodenbearbeitung steht eine deutliche Verminderung der Herstellungskosten des Bodenbearbeitungsgerätes bei gleichzeitig verbesserter Robustheit und Widerstandsfähigkeit gegen Belastungen im Einsatz gegenüber.

Auch durch ein händisch bedienbares Element als Verstelleinheit wird eine lineare, quer zur Fahrtrichtung orientierte Bewegung des ersten und des zweiten Stellmittels bewirkt, wobei die Bewegung des ersten Stellmittels antiparallel zur Bewegung des zweiten Stellmittels orientiert ist. Die Bewegung der Stellmittel wird auf diese Weise direkt proportional in eine entsprechende Veränderung der Ausdehnung rahmenartigen Elemente quer zur Fahrtrichtung umgesetzt.

Gemäß einer weiteren, besonders bevorzugten Ausführungsform der vorliegenden Erfindung ist an dem Rahmen eine Mehrzahl an Bearbeitungseinheiten mit einer Mehrzahl an rahmenartigen Elementen angeordnet. Insbesondere bevorzugt wird durch eine Bewegung des ersten Stellmittels und des zweiten Stellmittels die Ausdehnung der rahmenartigen Elemente quer zur Fahrtrichtung in identischer Weise verändert. Diese Ausführungsform trägt der Tatsache Rechnung, dass moderne landwirtschaftliche Geräte eine Breite von mehreren Metern aufweisen und dadurch eine Mehrzahl an Gassen zwischen Reihen von Kulturpflanzen in einem Arbeitsgang gleichzeitig bearbeitet werden kann. Mit der beschriebenen Ausführungsform werden sämtliche rahmenartigen Elemente synchron verändert und die Bearbeitungswerkzeuge synchron bewegt. Auf eine vom Landwirt auf der Zugmaschine wahrgenommene Änderung der Bedingungen oder der Pflanzenart des Anbaugebiets kann dadurch unmittelbar mit einer entsprechenden Anpassung der Breite sämtlicher rahmenartigen Elemente reagiert werden.

Gemäß einer weiteren Ausführungsform der vorliegenden Erfindung ist in dem Fall, dass an dem Rahmen eine Mehrzahl an Bearbeitungseinheiten mit einer Mehrzahl an rahmenartigen Elementen angeordnet ist, ein quer zur Fahrtrichtung angeordnetes Rohr mit einer der Anzahl an Bearbeitungseinheiten entsprechenden Anzahl an ersten und zweiten Eingriffsmitteln vorgesehen. Jedes der ersten Eingriffsmittel steht in Eingriff mit jeweils einem, ein linksdrehendes Innengewinde aufweisenden ersten Stellmittel, das in Form einer ersten Gewindehülse ausgebildet ist, und jedes der zweiten Eingriffsmittel steht in Eingriff mit jeweils einem, ein rechtsdrehendes Innengewinde aufweisenden zweiten Stellmittel, das in Form einer zweiten Gewindehülse ausgebildet ist. Durch die an dem Rohr vorgesehenen Eingriffsmittel und deren Kombination mit Gewindehülsen, die mit verschiedengängigen Innengewinden ausgestattet sind, wird erreicht, dass die Drehung des Rohres in die eine Richtung eine Vergrößerung der Distanz zwischen den beiden Gewindehülsen bewirkt und durch eine Drehung des Rohres in die andere Richtung eine Verringerung der Distanz zwischen den beiden Gewindehülsen erfolgt. Die Bewegung der Gewindehülsen wird über Verbindungsteile auf das rahmenartige Element übertragen, dessen elastische Eigenschaften oder Gelenke eine Anpassung der Breite des rahmenartigen Elements quer zur Fahrtrichtung erlaubt.

Dies erfolgt in der beschriebenen Weise sowohl bei einer einzelnen Bearbeitungseinheit wie auch bei einer Mehrzahl von Bearbeitungseinheiten. Im Falle einer Mehrzahl an Bearbeitungseinheiten werden durch eine Drehung des Rohres um dessen Längsachse die rahmenartigen Elemente in identischer Weise verändert, wodurch sich die Ausdehnung der Mehrzahl an rahmenartigen Elementen quer zur Fahrtrichtung in identischer Weise verändert. Auch diese Ausführungsform trägt der Tatsache Rechnung, dass moderne landwirtschaftliche Geräte eine Breite von mehreren Metern aufweisen und dadurch eine Mehrzahl an Gassen zwischen Reihen von Kulturpflanzen in einem Arbeitsgang gleichzeitig bearbeitet werden kann. Mit der beschriebenen Ausführungsform werden sämtliche Gewindehülsen synchron bewegt und dadurch sämtliche rahmenartigen Elemente synchron deformiert. Auf eine vom Landwirt auf der Zugmaschine wahrgenommene Änderung der Bedingungen oder der Pflanzenart des Anbaugebiets kann dadurch unmittelbar mit einer entsprechenden Anpassung der Breite sämtlicher rahmenartigen Elemente reagiert werden.

Im Einsatz zur Unkrautbekämpfung zwischen Reihen von Kulturpflanzen in einer späteren Wachstumsphase bewegt eine Zugmaschine das Bodenbearbeitungsgerät in Fahrtrichtung parallel zu den Pflanzenreihen. Jeder Gasse zwischen zwei Reihen von Kulturpflanzen ist eine Bearbeitungseinheit zugeordnet. Beim Einsatz des Bodenbearbeitungsgerätes zwischen Reihen von Kulturpflanzen schaffen vorauseilende vordere Sechen Vertiefungen von mehreren Zentimetern im Boden. Drei Hackschare werden in geringer Tiefe durch den Boden gezogen und durchschneiden dabei die Wurzeln des in der Gasse zwischen den Kulturpflanzen wuchernden Unkrauts. Zwei Striegelzinken scharren den Boden nahe der Kulturpflanzen auf, wobei sie gleichzeitig die von den Hackschare abgelösten Erdschollen und -brocken zerkleinern und das Unkraut an die Erdoberfläche zu ziehen. Verfestigter Boden nahe den Kulturpflanzen wird dabei von den Striegelzinken aufgebrochen. Zwei nachlaufende Sechen bewegen Erdreich in Richtung der Kulturpflanzen, füllen damit die zunächst geschaffenen Vertiefungen wieder auf und häufeln Erde nahe den Kulturpflanzen an.

Während der beschriebenen Unkrautbekämpfung zwischen Reihen von Kulturpflanzen in einer späteren Wachstumsphase sind die an dem scherenartig verschwenkbaren Verbindungselementen angeordneten Bearbeitungswerkzeuge entweder ganz entfernt oder in eine Parkposition verschwenkt. Gleiches gilt für die an dem Schwenkachselement angebrachten Striegelzinken.

Da jede der beispielsweise zwölf Bearbeitungseinheiten beispielsweise jeweils zwei Striegelzinken, drei Hackschare und vier Sechen aufweist, welche alle zusammen mit dem jeweiligen rahmenartigen Element bewegt werden, kann die komplette Bodenbearbeitung zwischen den Reihen von Kulturpflanzen an die spezifischen örtlichen Gegebenheiten angepasst werden. Sowohl der Abstand zwischen den Striegelzinken, wie auch der Abstand zwischen den Sechen und der Abstand zwischen den Hackscharen kann an den zu bearbeitenden Acker angepasst werden.

Ist an dem Rahmen eine Mehrzahl an Bearbeitungseinheiten mit einer Mehrzahl an rahmenartigen Elementen angeordnet, so werden durch eine Bewegung des ersten Stellmittels und des zweiten Stellmittels die rahmenartigen Elemente derart deformiert, dass sich die Ausdehnung der Mehrzahl an rahmenartigen Elementen quer zur Fahrtrichtung in identischer Weise verändert. Dadurch kann eine Mehrzahl an Gassen zwischen Reihen von Kulturpflanzen in einem Arbeitsgang gleichzeitig bearbeitet werden. Auf eine vom Landwirt auf der Zugmaschine wahrgenommene Änderung der Bedingungen oder der Pflanzenart des Anbaugebiets kann unmittelbar mit einer entsprechenden Anpassung der Breite sämtlicher rahmenartigen Elemente reagiert werden.

### Kurze Beschreibung der Zeichnungen

Die Erfindung soll nachfolgend anhand von Ausführungsbeispielen im Zusammenhang mit den Zeichnungen näher erläutert werden. Es wird aber ausdrücklich darauf hingewiesen, dass die Erfindung nicht auf die angegebenen Beispiele beschränkt sein soll. Es zeigen
- Fig. 1: in schematischer Darstellung einen Teil einer Bearbeitungseinheit eines Bodenbearbeitungsgerätes gemäß der Erfindung;
- Fig. 2: in schematischer Darstellung eine Bearbeitungseinheit eines Bodenbearbeitungsgerätes gemäß der Erfindung;
- Fig. 3: die Bearbeitungseinheit der Fig. 1 mit veränderter Ausdehnung des rahmenartigen Elements.

### Wege zur Ausführung der Erfindung

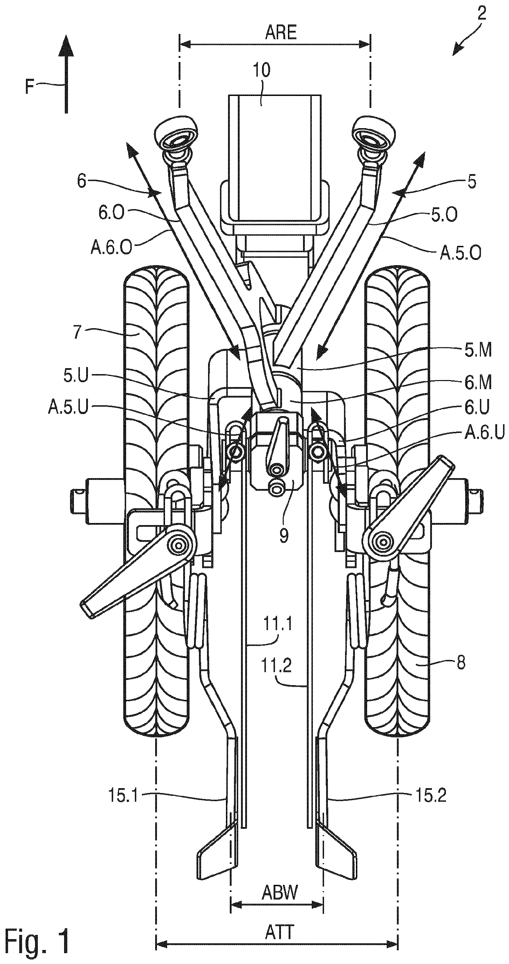

Die Figur 1 zeigt in schematischer Darstellung einen Teil einer Bearbeitungseinheit 2 eines Bodenbearbeitungsgerätes für die mechanische Unkrautbekämpfung in Reihen von Kulturpflanzen gemäß der Erfindung. Das Bodenbearbeitungsgerät weist einen an einer Zugmaschine befestigbaren Rahmen (nicht gezeigt) zum Bewegen entlang einer Fahrtrichtung F auf, an dem die Bearbeitungseinheit 2 befestigt ist.

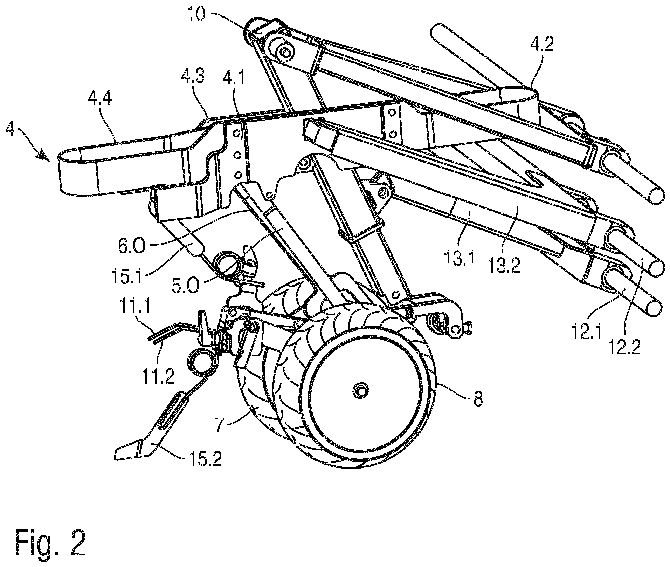

Die Bearbeitungseinheit 2 weist ein rahmenartiges Element 4 auf (siehe Figur 2), dessen Ausdehnung quer zur Fahrtrichtung veränderbar ist. An dem rahmenartigen Element 4 ist über ein erstes Verbindungselement 5 ein erstes Bodenbearbeitungswerkzeug 15.1 befestigt. Die in der Figur 1 am oberen Ende des ersten Verbindungselements gezeigte Öse stellt ein Mittel zur Befestigung des ersten Verbindungselements 5 mit dem rahmenartigen Element 4 bereit.

An dem rahmenartigen Element 4 ist über ein zweites Verbindungselement 6 ein zweites Bodenbearbeitungswerkzeug 15.2 befestigt. Die in der Figur 1 am oberen Ende des zweiten Verbindungselements gezeigte Öse stellt ein Mittel zur Befestigung des zweiten Verbindungselements 6 mit dem rahmenartigen Element 4 bereit.

Die Bearbeitungseinheit 2 weist außerdem ein zumindest abschnittsweise im Querschnitt zylinderförmig ausgebildetes Schwenkachselement 9 auf, wobei das erste Bodenbearbeitungswerkzeug 15.1 und das zweite Bodenbearbeitungswerkzeug 15.2 quer zur Fahrtrichtung F auf verschiedenen Seiten des Schwenkachselements 9 angeordnet sind.

Das erste Bodenbearbeitungswerkzeug 15.1 und das zweite Bodenbearbeitungswerkzeug 15.2 sind in dem in Figur 1 gezeigten Ausführungsbeispiel in Form von Winkelhackmessern ausgebildet, die in der dargestellten Version Erdreich von den Kulturpflanzen wegbefördern. Das erste Winkelhackmesser 15.1 ist an dem unteren Abschnitt 5.U des ersten Verbindungselements 5 befestigt und das zweite Winkelhackmesser 15.2 ist an dem unteren Abschnitt 6.U des zweiten Verbindungselements 6 befestigt.

Das erste Verbindungselement 5 umfasst einen ersten, ringförmigen, das Schwenkachselement 9 hülsenartig umschließenden Abschnitt 5.M, einen oberen, mit dem rahmenartigen Element 4 und mit dem ringförmigen Abschnitt 5.M verbundenen Abschnitt 5.0 und einen unteren, mit dem ringförmigen Abschnitt 5.M und mit dem ersten Bodenbearbeitungswerkzeug 15.1 verbundenen Abschnitt 5.U auf.

Das zweite Verbindungselement 6 umfasst einen zweiten, ringförmigen, das Schwenkachselement 9 hülsenartig umschließenden Abschnitt 6.M, einen oberen, mit dem rahmenartigen Element 4 und mit dem ringförmigen Abschnitt 6.M verbundenen Abschnitt 6.0 und einen unteren, mit dem ringförmigen Abschnitt 6.M und mit dem zweiten Bodenbearbeitungswerkzeug 15.2 verbundenen Abschnitt 6.U auf.

Bei dem in der Figur 1 dargestellten Ausführungsbeispiel kreuzen sich das erste und das zweite Verbindungselement 5, 6 im Bereich des Schwenkachselements 9 und können daher scherenartig um das Schwenkachselement 9 verschwenkt werden. Durch eine Vergrößerung der Ausdehnung des rahmenartigen Elements ARE quer zur Fahrtrichtung F wird daher eine Vergrößerung des Abstandes zwischen dem ersten Bodenbearbeitungswerkzeug und dem zweiten Bodenbearbeitungswerkzeug ABW quer zur Fahrtrichtung F bewirkt. Eine Verkleinerung der Ausdehnung des rahmenartigen Elements 4 quer zur Fahrtrichtung bewirkt entsprechend eine Verkleinerung des Abstandes zwischen dem ersten Bodenbearbeitungswerkzeug und dem zweiten Bodenbearbeitungswerkzeug quer zur Fahrtrichtung 2.

Durch das Verschwenken der Verbindungselemente 5, 6 wird die Möglichkeit geschaffen, eine Über- oder Untersetzung vorzusehen. Die Bodenbearbeitungswerkzeuge 15.1, 15.2 folgen der Veränderung des rahmenartigen Elements 4 nicht in identischem Maße, sondern mit einer im Prinzip frei wählbaren Übersetzung. Bei einer entsprechend gewählten Untersetzung wird es somit möglich, den Abstand zwischen den Bodenbearbeitungswerkzeugen 15.1, 15.2 in sehr kleinen Schritten und extrem genau zu verändern.

Bei der in Figur 1 dargestellten Ausführungsform ist die Ausdehnung des oberen Abschnitts 5.0 des ersten Verbindungselements 5 in einer von dem rahmenartigen Element 4 zu dem ringförmigen Abschnitt 5.M weisenden Richtung A.5.O größer als die Ausdehnung des unteren Abschnitts 5.U des ersten Verbindungselements 5 in einer von dem ringförmigen Abschnitt 5.M zu dem ersten Bodenbearbeitungswerkzeug 15.1 weisenden Richtung A.5.U. Die Ausdehnung des oberen Abschnitts 6.0 des zweiten Verbindungselements 6 in einer von dem rahmenartigen Element 4 zu dem ringförmigen Abschnitt 6.M weisenden Richtung A.6.O größer ist als die Ausdehnung des unteren Abschnitts 6.U des zweiten Verbindungselements 6 in einer von dem ringförmigen Abschnitt 6.M zu dem zweiten Bodenbearbeitungswerkzeug 15.2 weisenden Richtung A.6.U.

Bei der in Figur 1 dargestellten Ausführungsform ist also jeweils der sich oberhalb des Schwenkachselements 9 erstreckende Abschnitt 5.0, 6.O des jeweiligen Verbindungselements länger als der sich unterhalb des Schwenkachselements 9 erstreckende Abschnitt 5.U, 6.U. Bei einer Veränderung der Ausdehnung des rahmenartigen Elements ARE quer zur Fahrtrichtung F wird diese Veränderung daher in eine vergleichsweise geringere Veränderung des Abstandes ABW zwischen den beiden, an den Verbindungselementen befestigten Bodenbearbeitungswerkzeugen 15.1, 15.2 quer zur Fahrtrichtung F übersetzt. Dies bringt bei der Unkrautbekämpfung in Reihen von Kulturpflanzen ganz erhebliche Vorteile mit sich. Es kann nämlich eine relativ grobe Veränderung der Ausdehnung des rahmenartigen Elements 4 in eine sehr kleine, extrem genau Veränderung des Abstands zwischen den Bodenbearbeitungswerkzeugen 15.1, 15.2 umgesetzt werden. Dadurch können die Bodenbearbeitungswerkzeuge 15.1, 15.2 sehr genau bis unmittelbar an die Kulturpflanzen und insbesondere auch an junge Kulturpflanzen in einer frühen Wachstumsphase herangeführt werden. Unkraut wird mit hoher Effektivität entfernt, ohne die Pflanzen zu schädigen.

An der in Figur 1 dargestellten Bearbeitungseinheit 2 sind ein erstes und ein zweites Tiefenführungsrad 7, 8 angeordnet, wobei das erste Tiefenführungsrad 7 und das zweite Tiefenführungsrad 8 quer zur Fahrtrichtung F auf verschiedenen Seiten des Schwenkachselements 9 angeordnet sind. Dabei ist das erste Tiefenführungsrad 7 an dem unteren Abschnitt 5.U des ersten Verbindungselements 5 befestigt und das zweite Tiefenführungsrad 8 ist an dem unteren Abschnitt 6.U des zweiten Verbindungselements 6 befestigt. Bei einer Veränderung der Ausdehnung des rahmenartigen Elements ARE quer zur Fahrtrichtung F kommt es daher zu einer Veränderung des Abstandes zwischen dem ersten Tiefenführungsrad und dem zweiten Tiefenführungsrad ATT quer zur Fahrtrichtung F.

Das in den Figuren 1 und 2 gezeigte Stützelement 10 ist längenvariabel und an dem Schwenkachselement 9 befestigt. Durch das längenvariable Stützelement 10 kann eine Höhenverstellung der Tiefenführungsräder 7, 8 relativ zu dem rahmenartigen Element vorgenommen werden.

Die Bearbeitungseinheit 2 weist einen ersten 11.1 und einen zweiten Striegelzinken 11.2 auf, wobei der erste 11.1 und der zweite Striegelzinken 11.2 an dem Schwenkachselement 9 befestigt sind, wobei der erste 11.1 und der zweite Striegelzinken 11.2 zwischen einer Parkposition und einer Nutzposition klappbar ausgebildet sind. In der Figur 1 sind die Striegelzinken 11.1, 11.2 in ihrer Nutzposition dargestellt.

Durch die Befestigung der Striegelzinken 11.1, 11.2 an dem Schwenkachselement 9 wird erreicht, dass sich der Abstand zwischen den beiden Striegelzinken 11.1, 11.2 bei einer Änderung der Ausdehnung ARE des rahmenartigen Elements 4 quer zur Fahrtrichtung F nicht verändert. Die beiden Striegelzinken 11.1, 11.2 sind vielmehr in einem vorbestimmten Abstand zueinander an dem Schwenkachselement 9 befestigt. Der Abstand zwischen den beiden Striegelzinken 11.1, 11.2 wird dabei entsprechend der Größe der Kulturpflanzen in einer anfänglichen Wachstumsphase gewählt. Bei der Bodenbearbeitung in einer Pflanzenreihe, also bei einer Bodenbearbeitung, bei der die beiden Tiefenführungsräder 7, 8 so geführt werden, dass sich die Pflanzenreihe immer zwischen den beiden Rädern befindet, laufen die beiden Striegelzinken 11.1, 11.2 die Pflanzenreihe immer an beiden Seiten der einzelnen Pflanzen ab. Der Boden wird also auf beiden Seiten jeder Kulturpflanze aufgelockert und dort wachsendes Unkraut abgetötet. Da diese Art der Bearbeitung mit ganz besonderer Vorsicht durchgeführt werden muss, um die jungen Kulturpflanzen nicht zu schädigen, werden bevorzugt Striegelzinken 11.1, 11.2 eingesetzt, die eine im Vergleich zu üblichen Striegelzinken verkleinerte Dimensionierung aufweisen. Selbstverständlich dürfen die Striegelzinken nicht zu filigran ausgebildet werden, um eine häufige Beschädigung bzw. Zerstörung der Zinken zu vermeiden, der Durchmesser und die elastische Biegbarkeit der Zinken kann aber angepasst an die geringe Wuchshöhe der Pflanzen gewählt werden.

In der Figur 2 ist die Bearbeitungseinheit 2 einschließlich des rahmenartigen Elements 4 dargestellt. Das rahmenartige Element 4 ist aus einem ersten 4.1, einem zweiten 4.2, einem dritten 4.3 und einem vierten Teilelement 4.4 aufgebaut, wobei das erste 4.1 und das dritte Teilelement 4.3 aus einem linearen Stück Federstahl gebildet sind, während das zweite 4.2 und das vierte Teilelement 4.4 aus einem U-förmig gebogenen Stück Federstahl bestehen. Die einzelnen Teilelemente sind fest miteinander verbunden und bilden zusammen ein aus elastischem Federstahl bestehendes rahmenartiges Element 4. Das rahmenartige Element 4 weist eine annähernd ovale Form mit zwei linearen Abschnitten auf.

Die Figur 2 zeigt die Striegelzinken 11.1, 11.2 in ihrer Parkposition. Die Striegelzinken sind dabei aus ihrer Nutzposition hochgeklappt. Das erste Winkelhackmesser 15.1 ist ebenfalls in seine Parkposition hochgeklappt, während das zweite Winkelhackmesser 15.2 in Nutzposition dargestellt ist.

Das Bodenbearbeitungsgerät umfasst ein erstes, beweglich ausgebildetes Stellmittel 12.1 und ein zweites, beweglich ausgebildetes Stellmittel 12.2. Das erste Stellmittel 12.1 ist durch das erste Verbindungsteil 13.1 im Bereich des ersten Teilelements 4.1 mit dem rahmenartigen Element 4 verbunden. Das zweite Stellmittel 12.2 ist durch das zweite Verbindungsteil 13.2 im Bereich des dritten Teilelements 4.3 mit dem rahmenartigen Element 4 verbunden.

Durch eine antiparallele Bewegung des ersten Stellmittels 12.1 und des zweiten Stellmittels 12.2 werden die Verbindungsteile 13.1, 13.2 entweder aufeinander zu oder voneinander weg bewegt. Dadurch wird das rahmenartige Element 4 insbesondere im Bereich der gebogenen Teilelemente 4.2, 4.4 deformiert, sodass sich die Ausdehnung des rahmenartigen Elements 4 quer zur Fahrtrichtung F verändert.

Die Bewegung des ersten 12.1 und des zweiten Stellmittels 12.2 wird durch eine auf die Stellmittel einwirkende Verstelleinheit (nicht gezeigt) verursacht. Bei der Verstelleinheit handelt es sich um einen mittels eines Steuergeräts ansteuerbaren hydraulischen Stellantrieb. Mit Hilfe der Verstelleinheit kann die Bewegung des ersten und des zweiten Stellmittels 12.1, 12.2 von der Zugmaschine aus auch während der Bodenbearbeitung bewirkt werden. Die Breite des rahmenartigen Elements 4 kann damit bei Bedarf einfach und schnell an die jeweiligen Verhältnisse auf dem Acker angepasst werden, wobei der Bodenbearbeitungsvorgang nicht zu unterbrochen werden braucht.

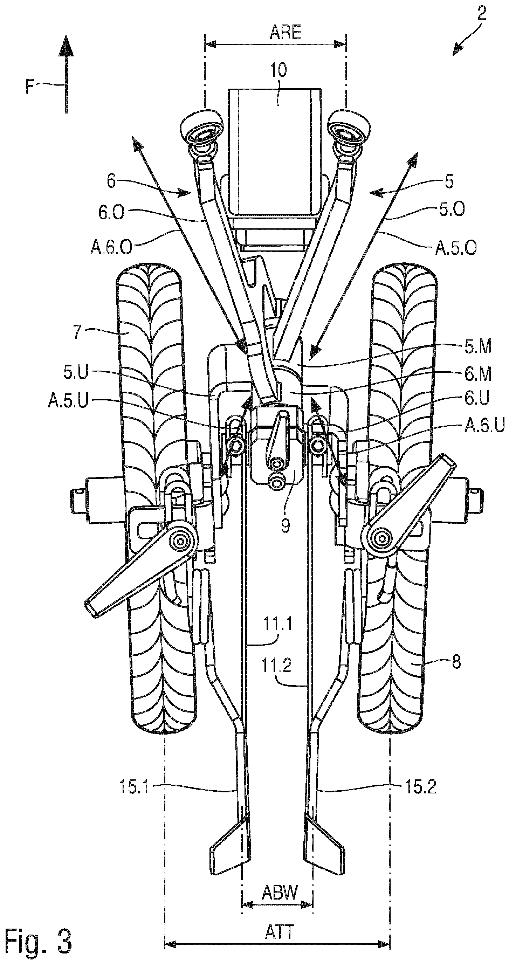

Die Figur 3 zeigt in schematischer Darstellung den bereits in Figur 1 gezeigten Teil einer Bearbeitungseinheit 2 eines Bodenbearbeitungsgerätes für die mechanische Unkrautbekämpfung in Reihen von Kulturpflanzen gemäß der Erfindung. In der Figur 3 sind die Auswirkungen einer Verkleinerung der Ausdehnung des rahmenartigen Elements 4 dargestellt. Das rahmenartige Element 4 ist, wie auch in Figur 1, nicht gezeigt. Wie in Figur 1 stellen die am oberen Ende des ersten Verbindungselements 5 gezeigte Öse und die am oberen Ende des zweiten Verbindungselements 6 gezeigte Öse Mittel zur Befestigung der Verbindungselemente 5, 6 an dem rahmenartigen Element 4 bereit. Die Veränderung der Ausdehnung des rahmenartigen Elements 4 kann also anhand der Veränderung des Abstandes zwischen den beiden Ösen dargestellt werden.

Aus einem Vergleich der Figuren 1 und 3 ist die Verkleinerung des Abstandes zwischen den beiden Ösen und damit die Verkleinerung der Ausdehnung ARE des rahmenartigen Elements 4 deutlich zu ersehen. Aufgrund der Tatsache, dass bei beiden Verbindungselementen 5, 6 die oberen Abschnitte 5.O, 6.O eine größere Ausdehnung aufweisen als ihre unteren Abschnitte 5.U, 6.U wird durch die Verkleinerung der Ausdehnung des rahmenartigen Elements ARE quer zur Fahrtrichtung F eine im Vergleich dazu geringere Verkleinerung des Abstandes ABW zwischen dem ersten Bodenbearbeitungswerkzeug 15.1 und dem zweiten Bodenbearbeitungswerkzeug 15.2 quer zur Fahrtrichtung F bewirkt.

Ein Vergleich der Figuren 1 und 3 zeigt außerdem, dass durch eine Veränderung der Ausdehnung ARE des rahmenartigen Elements quer zur Fahrtrichtung F eine Veränderung des Abstandes ATT zwischen dem ersten Tiefenführungsrad 6 und dem zweiten Tiefenführungsrad 7 quer zur Fahrtrichtung F bewirkt werden kann. Der Abstand ATT zwischen den beiden Tiefenführungsrädern 6, 7 kann in diesem Fall an die Größe der einzelnen Pflanzen der Reihe an Kulturpflanzen angepasst werden. Bei der Unkrautbekämpfung in einem frühen Wachstumsstadium der Pflanzen werden die Reihen so abgefahren, dass sich die einzelnen Pflanzen zwischen den beiden Tiefenführungsrädern 6, 7 befinden. Dabei muss darauf geachtet werden, dass die Pflanzen durch die Räder nicht geschädigt werden. Dies wird durch den veränderlichen Abstand der Räder in einfacher Weise möglich gemacht.

Aufgrund der Tatsache, dass bei beiden Verbindungselementen 5, 6 die oberen Abschnitte 5.O, 6.O eine größere Ausdehnung aufweisen als ihre unteren Abschnitte 5.U, 6.U wird durch eine Verkleinerung der Ausdehnung des rahmenartigen Elements ARE quer zur Fahrtrichtung F eine im Vergleich dazu geringere Verkleinerung des Abstandes ATT zwischen dem ersten Tiefenführungsrad 6 und dem zweiten Tiefenführungsrad 7 quer zur Fahrtrichtung F bewirkt.

Da die beiden Tiefenführungsräder 7, 8 an dem unteren Abschnitt 5.U, 6.U des jeweiligen Verbindungselements 5, 6 befestigt sind, und diese Verbindungselemente 5, 6 starr ausgebildet sind, verändert sich bei einem Verschwenken der Verbindungselemente 5, 6 der Sturz der Tiefenführungsräder 7, 8. Ausgehend von der in Figur 1 gezeigten Grundeinstellung ohne Sturz führt eine Verkleinerung der Ausdehnung ARE des rahmenartigen Elements 4 quer zur Fahrtrichtung F zu einer Verkleinerung des Abstandes zwischen den Tiefenführungsrädern und zu einem negativen Sturz der Räder. Dadurch wird durch die Tiefenführungsräder 7, 8 Erde von der Pflanzenreihe weg nach außen bewegt.

### Bezugszeichenliste

- 2: Bearbeitungseinheit
- 4: rahmenartiges Element
- 4.1: erstes Teilelement des rahmenartigen Elements
- 4.2: zweites Teilelement des rahmenartigen Elements
- 4.3: drittes Teilelement des rahmenartigen Elements
- 4.4: viertes Teilelement des rahmenartigen Elements
- 5: erstes Verbindungselement
- 5.M: ringförmiger Abschnitt des ersten Verbindungselements
- 5.O: oberer Abschnitt des ersten Verbindungselements
- 5.U: unterer Abschnitt des ersten Verbindungselements
- 6: zweites Verbindungselement
- 6.M: ringförmiger Abschnitt des zweiten Verbindungselements
- 6.O: oberer Abschnitt des zweiten Verbindungselements
- 6.U: unterer Abschnitt des zweiten Verbindungselements
- 7: erstes Tiefenführungsrad
- 8: zweites Tiefenführungsrad
- 9: Schwenkachselement
- 10: Stützelement
- 11.1: erster Striegelzinken
- 11.2: zweiter Striegelzinken
- 12.1: erstes Stellmittel
- 12.2: zweites Stellmittel
- 13.1: erstes Verbindungsteil
- 13.2: zweites Verbindungsteil
- 15.1: erstes Bodenbearbeitungswerkzeug
- 15.2: zweites Bodenbearbeitungswerkzeug

- ABW: Abstand zwischen dem ersten Bodenbearbeitungswerkzeug und dem zweiten Bodenbearbeitungswerkzeug
- ARE: Ausdehnung des rahmenartigen Elements quer zur Fahrtrichtung
- ATT: Abstand zwischen dem ersten Tiefenführungsrad und dem zweiten Tiefenführungsrad
- A.5.O: Ausdehnung des oberen Abschnitts des ersten Verbindungselements
- A.5.U: Ausdehnung des unteren Abschnitts des ersten Verbindungselements
- A.6.O: Ausdehnung des oberen Abschnitts des zweiten Verbindungselements
- A.6.U: Ausdehnung des unteren Abschnitts des zweiten Verbindungselements
- F: Fahrtrichtung

## Patentansprüche

1. Bodenbearbeitungsgerät für die mechanische Unkrautbekämpfung in Reihen von Kulturpflanzen, aufweisend einen an einer Zugmaschine befestigbaren Rahmen zum Bewegen entlang einer Fahrtrichtung (F) und zumindest eine, an dem Rahmen befestigte Bearbeitungseinheit (2), wobei die zumindest eine Bearbeitungseinheit (2) aufweist:
- ein rahmenartiges Element (4), wobei die Ausdehnung des rahmenartigen Elements (4) quer zur Fahrtrichtung (F) veränderbar ist,
- zumindest ein über ein erstes Verbindungselement (5) an dem rahmenartigen Element (4) befestigtes erstes Bodenbearbeitungswerkzeug (15.1),
- zumindest ein über ein zweites Verbindungselement (6) an dem rahmenartigen Element befestigtes zweites Bodenbearbeitungswerkzeug (15.2),
- ein zumindest abschnittsweise im Querschnitt zylinderförmig ausgebildetes Schwenkachselement (9),
wobei das erste Bodenbearbeitungswerkzeug (15.1) und das zweite Bodenbearbeitungswerkzeug (15.2) quer zur Fahrtrichtung (F) auf verschiedenen Seiten des Schwenkachselements (9) angeordnet sind,
wobei das erste Verbindungselement (5) einen ersten ringförmigen, das Schwenkachselement (9) hülsenartig umschließenden Abschnitt (5.M) aufweist, wobei das zweite Verbindungselement (6) einen zweiten ringförmigen, das Schwenkachselement (9) hülsenartig umschließenden Abschnitt (6.M) aufweist, wobei das erste und das zweite Verbindungselement (5, 6) derart um das Schwenkachselement (9) schwenkbar angeordnet sind, dass durch eine Veränderung der Ausdehnung des rahmenartigen Elements (ARE) quer zur Fahrtrichtung (F) eine Veränderung des Abstandes zwischen dem ersten Bodenbearbeitungswerkzeug und dem zweiten Bodenbearbeitungswerkzeug (ABW) quer zur Fahrtrichtung (F) bewirkbar ist.

2. Bodenbearbeitungsgerät nach Anspruch 1, **dadurch gekennzeichnet, dass**
das erste Verbindungselement (5) einen oberen, mit dem rahmenartigen Element (4) und mit dem ersten ringförmigen Abschnitt (5.M) verbundenen Abschnitt (5.O) und einen unteren, mit dem ersten ringförmigen Abschnitt (5.M) und mit dem ersten Bodenbearbeitungswerkzeug (15.1) verbundenen Abschnitt (5.U) aufweist, und
das zweite Verbindungselement (6) einen oberen, mit dem rahmenartigen Element (4) und mit dem zweiten ringförmigen Abschnitt (6.M) verbundenen Abschnitt (6.O) und einen unteren, mit dem zweiten ringförmigen Abschnitt (6.M) und mit dem zweiten Bodenbearbeitungswerkzeug (15.2) verbundenen Abschnitt (6.U) aufweist.

3. Bodenbearbeitungsgerät nach Anspruch 2, **dadurch gekennzeichnet, dass**
die Ausdehnung des oberen Abschnitts (A.5.O) des ersten Verbindungselements (5) in einer von dem rahmenartigen Element (4) zu dem ersten ringförmigen Abschnitt (5.M) weisenden Richtung größer ist als die Ausdehnung des unteren Abschnitts (A.5.U) des ersten Verbindungselements (5) in einer von dem ersten ringförmigen Abschnitt (5.M) zu dem ersten Bodenbearbeitungswerkzeug (15.1) weisenden Richtung und
die Ausdehnung des oberen Abschnitts (A.6.O) des zweiten Verbindungselements (6) in einer von dem rahmenartigen Element (4) zu dem zweiten ringförmigen Abschnitt (6.M) weisenden Richtung größer ist als die Ausdehnung (A.6.U) des unteren Abschnitts (6.U) des zweiten Verbindungselements (6) in einer von dem zweiten ringförmigen Abschnitt (6.M) zu dem zweiten Bodenbearbeitungswerkzeug (15.2) weisenden Richtung, wobei durch eine Veränderung der Ausdehnung des rahmenartigen Elements (ARE) quer zur Fahrtrichtung (F) eine im Vergleich dazu geringere Veränderung des Abstandes zwischen dem ersten Bodenbearbeitungswerkzeug und dem zweiten Bodenbearbeitungswerkzeug (ABW) quer zur Fahrtrichtung (F) bewirkbar ist.

4. Bodenbearbeitungsgerät nach Anspruch 2, **dadurch gekennzeichnet, dass**
die Ausdehnung des oberen Abschnitts (A.5.O) des ersten Verbindungselements (5) in einer von dem rahmenartigen Element (4) zu dem ersten ringförmigen Abschnitt (5.M) weisenden Richtung geringer ist als die Ausdehnung des unteren Abschnitts (A.5.U) des ersten Verbindungselements (5) in einer von dem ersten ringförmigen Abschnitt (5.M) zu dem ersten Bodenbearbeitungswerkzeug (15.1) weisenden Richtung und
die Ausdehnung des oberen Abschnitts (A.6.O) des zweiten Verbindungselements (6) in einer von dem rahmenartigen Element (4) zu dem zweiten ringförmigen Abschnitt (6.M) weisenden Richtung geringer ist als die Ausdehnung des unteren Abschnitts (A.6.U) des zweiten Verbindungselements (6) in einer von dem zweiten ringförmigen Abschnitt (6.M) zu dem zweiten Bodenbearbeitungswerkzeug (15.2) weisenden Richtung, wobei durch eine Veränderung der Ausdehnung des rahmenartigen Elements (ARE) quer zur Fahrtrichtung (F) eine im Vergleich dazu größere Veränderung des Abstandes zwischen dem ersten Bodenbearbeitungswerkzeug und dem zweiten Bodenbearbeitungswerkzeug (ABW) quer zur Fahrtrichtung (F) bewirkbar ist.

5. Bodenbearbeitungsgerät nach einem der Ansprüche 1 bis 4, **dadurch gekennzeichnet, dass** es sich bei dem ersten (15.1) und dem zweiten Bodenbearbeitungswerkzeug (15.2) um ein erstes und ein zweites Winkelhackmesser handelt, wobei das erste Winkelhackmesser (15.1) an dem unteren Abschnitt (5.U) des ersten Verbindungselements (5) befestigt ist und das zweite Winkelhackmesser (15.2) an dem unteren Abschnitt (6.U) des zweiten Verbindungselements (6) befestigt ist.

6. Bodenbearbeitungsgerät nach einem der Ansprüche 1 bis 5, **dadurch gekennzeichnet, dass** ein erstes (7) und ein zweites Tiefenführungsrad (8) vorgesehen sind, wobei das erste Tiefenführungsrad (7) und das zweite Tiefenführungsrad (8) quer zur Fahrtrichtung (F) auf verschiedenen Seiten des Schwenkachselements (9) angeordnet sind, wobei das erste Tiefenführungsrad (7) an dem unteren Abschnitt (5.U) des ersten Verbindungselements (5) befestigt ist und das zweite Tiefenführungsrad (8) an dem unteren Abschnitt (6.U) des zweiten Verbindungselements (6) befestigt ist, wobei durch eine Veränderung der Ausdehnung des rahmenartigen Elements (ARE) quer zur Fahrtrichtung (F) eine Veränderung des Abstandes zwischen dem ersten Tiefenführungsrad und dem zweiten Tiefenführungsrad (ATT) quer zur Fahrtrichtung (F) bewirkbar ist

7. Bodenbearbeitungsgerät nach einem der Ansprüche 1 bis 6, **dadurch gekennzeichnet, dass** ein Stützelement (10) vorgesehen ist, wobei das Stützelement (10) an dem Schwenkachselement (9) befestigt ist.

8. Bodenbearbeitungsgerät nach Anspruch 7, **dadurch gekennzeichnet, dass** es sich bei dem Stützelement (10) um ein längenvariables Stützelement (10) handelt und durch das längenvariable Stützelement (10) eine Höhenverstellung der Tiefenführungsräder (7, 8) relativ zu dem rahmenartigen Element (4) bewirkbar ist.

9. Bodenbearbeitungsgerät nach einem der Ansprüche 1 bis 8, **dadurch gekennzeichnet, dass** die Bearbeitungseinheit (2) zumindest einen ersten (11.1) und einen zweiten Striegelzinken (11.2) aufweist, wobei der erste (11.1) und der zweite Striegelzinken (11.2) an dem Schwenkachselement (9) befestigt sind, wobei der erste (11.1) und der zweite Striegelzinken (11.2) bevorzugt zwischen einer Parkposition und einer Nutzposition klappbar ausgebildet sind.

10. Bodenbearbeitungsgerät nach einem der Ansprüche 1 bis 9, **dadurch gekennzeichnet, dass** das rahmenartige Element (4) zumindest abschnittsweise aus einem elastischen Material besteht, wobei es sich bei dem elastischen Material bevorzugt um ein Elastomer, einen Thermoplast, einen Gummi, insbesondere Hartgummi, oder um Stahl, insbesondere Federstahl, handelt.

11. Bodenbearbeitungsgerät nach einem der Ansprüche 1 bis 10, **dadurch gekennzeichnet, dass** an der Bearbeitungseinheit (2) eine Mehrzahl an Bearbeitungswerkzeugen vorgesehen ist, wobei die Bearbeitungswerkzeuge durch ein oder mehrere Verbindungsmittel mit dem rahmenartigen Element (4) der Bearbeitungseinheit (2) verbunden sind, wobei es sich bei den Bearbeitungswerkzeugen bevorzugt um Hackschare, Sechen und Striegelzinken handelt.

12. Bodenbearbeitungsgerät nach einem der Ansprüche 1 bis 11, **dadurch gekennzeichnet, dass** die Bearbeitungseinheit (2) aufweist:
- ein erstes, beweglich ausgebildetes Stellmittel (12.1), wobei das erste Stellmittel (12.1) über zumindest ein erstes Verbindungsteil (13.1) mit dem rahmenartigen Element (4) verbunden ist, und ein zweites, beweglich ausgebildetes Stellmittel (12.2), wobei das zweite Stellmittel (12.2) über zumindest ein zweites Verbindungsteil (13.2) mit dem rahmenartigen Element (4) verbunden ist, und
- zumindest eine Verstelleinheit zum Ausführen einer Bewegung des ersten (12.1) und des zweiten Stellmittels (12.2), wobei durch die Bewegung des ersten (12.1) und des zweiten Stellmittels (12.2) die Ausdehnung des rahmenartigen Elements (4) quer zur Fahrtrichtung (F) veränderbar ist.

13. Bodenbearbeitungsgerät nach Anspruch 12, **dadurch gekennzeichnet, dass** durch die Verstelleinheit eine lineare, quer zur Fahrtrichtung orientierte Bewegung des ersten (12.1) und des zweiten Stellmittels (12.2) bewirkbar ist, wobei die Bewegung des ersten Stellmittels (12.1) antiparallel zur Bewegung des zweiten Stellmittels (12.2) orientiert bewirkbar ist.

14. Bodenbearbeitungsgerät nach einem der Ansprüche 12 oder 13, **dadurch gekennzeichnet, dass** es sich bei der Verstelleinheit um einen mittels eines Steuergeräts ansteuerbaren elektrischen oder hydraulischen Stellantrieb handelt.

15. Bodenbearbeitungsgerät nach einem der Ansprüche 1 bis 14, **dadurch gekennzeichnet, dass** an dem Rahmen eine Mehrzahl an Bearbeitungseinheiten (2) mit einer Mehrzahl an rahmenartigen Elementen (4) angeordnet ist.
